# EUROPEAN PATENT SPECIFICATION

(11) **EP 2 658 338 B1**
(45) Date of publication and mention of the grant of the patent: **21.10.2015**
(21) Application number: 12737018.7
(22) Date of filing: 06.01.2012
(51) Int. Cl.: H04W 72/12

(54) **GROUP-BASED SCHEDULING METHOD, UE, AND NETWORK DEVICE**
GRUPPENBASIERTES PLANUNGSVERFAHREN, BENUTZEREINHEIT UND NETZWERKVORRICHTUNG
PROCÉDÉ DE PLANIFICATION BASÉ SUR UN GROUPE, EU ET DISPOSITIF RÉSEAU

(30) Priority: 17.01.2011 CN 201110009494
(43) Date of publication of application: 30.10.2013
(73) Proprietor: Huawei Technologies Co., Ltd., Longgang District Shenzhen, Guangdong 518129 (CN)
(72) Inventor: QUAN, Wei, Shenzhen, Guangdong 518129 (CN); JIANG, Yi, Shenzhen, Guangdong 518129 (CN); CHEN, Xiaofeng, Shenzhen, Guangdong 518129 (CN); HUANG, Qufang, Shenzhen, Guangdong 518129 (CN); ZHANG, Jian, Shenzhen, Guangdong 518129 (CN)
(74) Representative: Pfenning, Meinig & Partner GbR
(86) International application number: PCT/CN2012/070120
(87) International publication number: WO 2012/097690

(56) References cited:
- WO-A2-2009/022295
- WO-A2-2009/058906
- WO-A2-2009/121025
- CN-A- 1 805 557
- CN-A- 101 399 644
- CN-A- 101 594 205
- "Single-cell MBMS Transmission in Unicast/MBMS-Mixed Cells", 3GPP DRAFT; R2-080725, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sorrento, Italy; 20080204, 4 February 2008 (2008-02-04), XP050138552, [retrieved on 2008-02-04]

## Description

### TECHNICAL FIELD

The present invention relates to the field of wireless communication technologies, and in particular, to a group-based scheduling method, UE and network device.

### BACKGROUND

In a long term evolution (Long Term Evolution, LTE) system, a base station (eNodeB, eNB) transmits control signalling that is used for scheduling a user equipment (User Equipment, UE) by a physical downlink control channel (Physical Downlink Control Channel, PDCCH). When data of a UE in a connected state are scheduled, the control signalling is scrambled by a cell radio network temporary identity (Cell Radio Network Temporary Identity, C-RNTI) of the UE. The control signalling is scheduling information of the UE, and includes physical channel resources assigned for the UE and specific used modulation and coding scheme (Modulation and Coding Scheme, MCS) information and so on. After receiving the control signalling transmitted on the PDCCH, the UE decodes the control signalling with the C-RNTI of the UE to obtain related information carried in the decoded control signalling, and transceives data on a corresponding physical channel according to indication of the control signalling.

A PDCCH also occupies certain physical resources. A minimum unit of the physical resources occupied by control signalling transmitted on the PDCCH is a control channel element (Control Channel Element, CCE). One piece of control signalling may occupy one or more CCEs.

Because the physical resources occupied by a PDCCH are limited, the number of control signalling transmitted on the PDCCH is limited, which limits the number of scheduled data packets and the number of UEs, thereby limiting system capacity. In addition, more and more services in which small packets need to be transmitted in the network appear. However, due to a small data amount of the small packet, one MAC PDU usually can not be occupied completely, and thus padding bits need to be carried in the MAC PDU, which reduces utilization efficiency of system resources and results in a waste of system resources.

In addition, document "Single-cell MBMS Transmission in Unicast/MBMS-Mixed Cells, 3GPP DRAFT; R2-080725, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG2, no. Sorrento, Italy; 20080204, 4 February 2008 (2008-02-04), XP050138552" mainly describes a single-cell MBMS transmission in a Unicast/MBMS-Mixed Cell. Specifically, an eNB sends timing alignment (TA) information to UEs in a group scheduling manner for uplink synchronization. It means that the eNB would assemble all TA information of the UEs receiving the service in one MAC PDU. In addition, the scheduling of MBMS service is done on PDCCH identified by a Group ID. All UEs receiving the MBMS service share the common uplink ACK/NACK channel or every UE has its own uplink ACK/ NACK channel.

Document WO/2009/121025 A2 discloses certain aspects of the present disclosure relate to a method for sending control information to multiple user terminals that share the same resources in a SDMA wireless system. The control information can be transmitted from an access appoint over a PDCCH that is common for a plurality of user terminals. The overall PDCCH overhead can thus be reduced due to a smaller number of required PDCCH in the SDMA wireless system.

### SUMMARY

An embodiment of the present invention provides a group-based scheduling method, UE and network device, which increases system capacity.

In one aspect, a group-based scheduling method is provided, wherein the method includes:
obtaining, by a UE, a group scheduling identity, wherein the group scheduling identity is used for indicating a group scheduled by control signalling on a physical downlink control channel (PDCCH);
receiving, by the UE, scrambled control signalling on the PDCCH, and decoding the scrambled control signalling according to the group scheduling identity;
receiving, by the UE, a media access control protocol data unit (MAC PDU) according to the decoded control signalling, wherein the MAC PDU includes a data packet of at least one user equipment (UE) in one group; and
obtaining, by the UE, a physical uplink control channel (PUCCH) feedback resource position corresponding to a position of the data packet of the UE according to a corresponding relation between a position of the data packet of the at least one UE in the MAC PDU and the PUCCH feedback resource position, and sending ACK feedback information at the corresponding PUCCH feedback resource position.

In another aspect, a group-based scheduling method is provided, wherein the method includes:
encapsulating, by a network side, data packets of UEs which belong to one group into one MAC PDU;
sending, by the network side, to a UE, the MAC PDU and control signalling scrambled with a group scheduling identity of the group to which the UE belongs, so that the UE decodes the control signalling according to the group scheduling identity, receives the MAC PDU according to the control signalling, and obtains a PUCCH feedback resource position corresponding to a position of a data packet of the UE according to a corresponding relation between a position of the data packet of at least one UE in the MAC PDU and the PUCCH feedback resource position, wherein the group scheduling identity is used for indicating the group scheduled by the control signalling on a physical downlink control channel (PDCCH); and
receiving, by the network side, ACK feedback information sent by the UE at the corresponding PUCCH feedback resource position.

In one aspect, a UE is provided, wherein the UE includes:
an obtaining module, configured to obtain a group scheduling identity, wherein the group scheduling identity is used for indicating a group scheduled by control signalling on a physical downlink control channel (PDCCH);
a first receiving module, configured to receive scrambled control signalling on the PDCCH, and decode the scrambled control signalling according to the group scheduling identity obtained by the obtaining module;
a second receiving module, configured to receive a media access control protocol data unit (MAC PDU) according to the decoded control signalling received by the first receiving module, wherein the MAC PDU comprises a data packet of at least one UE in one group; and
a feedback module, configured to obtain a physical uplink control channel (PUCCH) feedback resource position corresponding to a position of a data packet of the UE according to a corresponding relation between a position of the data packet of the at least one UE in the MAC PDU received by the second receiving module and the PUCCH feedback resource position, and send ACK feedback information at the corresponding PUCCH feedback resource position.

In another aspect, a network device is provided, wherein the network device includes:
an encapsulating module, configured to encapsulate data packets of UEs which belong to one group into one MAC PDU;
a sending module, configured to send, to a UE, the MAC PDU obtained by the encapsulating module and control signalling scrambled with a group scheduling identity of the group to which the UE belongs, so that the UE decodes the control signalling according to the group scheduling identity, receives the MAC PDU according to the control signalling, and obtains a PUCCH feedback resource position corresponding to a position of a data packet of the UE according to a corresponding relation between the position of the data packet of at least one UE in the MAC PDU and the PUCCH feedback resource position, wherein the group scheduling identity is used for indicating the group scheduled by the control signalling on a physical downlink control channel (PDCCH); and
a receiving module, configured to receive ACK feedback information sent by the UE to which the sending module sends the MAC PDU at the corresponding PUCCH feedback resource position.

It can be seen from the above-mentioned technical schemes that, in the embodiments of the present invention, data packets of UEs which belong to one group are encapsulated into one MAC PDU, which may improve utilization efficiency of resources; and scheduling information of the UEs which belong to the one group is included in one piece of control signalling transmitted on a PDCCH, and more UEs can be scheduled by the one piece of control signalling, thereby improving the PDCCH utilization efficiency, and improving system capacity. A UE performs feedback to a base station, thereby realizing fast retransmission, improving reliability of data transmission and reducing data transmission delay.

### BRIEF DESCRIPTION OF THE DRAWINGS

To illustrate the technical schemes of the embodiments of the present invention more clearly, a brief introduction on the accompanying drawings needed in the description of the embodiments or the prior art is given below. Apparently, the accompanying drawings described below are some embodiments of the present invention, based on which other drawings can be obtained by those skilled in the art without any inventive efforts.
Fig. 1 is a schematic flowchart of a method of a first embodiment of the present invention;
Fig. 2 is a schematic flowchart of a method of a second embodiment of the present invention;
Fig. 3 is a schematic flowchart of a method of a third embodiment of the present invention;
Fig. 4 is a first schematic diagram of a format of a MAC PDU subheader in the prior art;
Fig. 5 is a second schematic diagram of a format of a MAC PDU subheader in the prior art;
Fig. 6 is a third schematic diagram of a format of a MAC PDU subheader in the prior art;
Fig. 7 is a schematic diagram of a format of a MAC PDU in the prior art;
Fig. 8 is a schematic diagram of a format of a MAC PDU in a first manner in an embodiment of the present invention;
Fig. 9 is a schematic diagram of a format of a newly added MAC CE in a second manner in an embodiment of the present invention;
Fig. 10 is a schematic diagram of a format of a MAC PDU in a second manner in an embodiment of the present invention;
Fig. 11 is a first schematic diagram of a format of a MAC PDU subheader in a third manner in an embodiment of the present invention;
Fig. 12 is a second schematic diagram of a format of a MAC PDU subheader in a third manner in an embodiment of the present invention;
Fig. 13 is a third schematic diagram of a format of a MAC PDU subheader in a third manner in an embodiment of the present invention;
Fig. 14 is a schematic diagram of a format of a MAC PDU in a third manner in an embodiment of the present invention;
Fig. 15 is a first schematic diagram of a format of a MAC PDU subheader in a fourth manner in an embodiment of the present invention;
Fig. 16 is a second schematic diagram of a format of a MAC PDU subheader in a fourth manner in an embodiment of the present invention;
Fig. 17 is a third schematic diagram of a format of a MAC PDU subheader in a fourth manner in an embodiment of the present invention;
Fig. 18 is a schematic diagram of a format of a MAC PDU in a fourth manner in an embodiment of the present invention;
Fig. 19 is a first schematic diagram of a format of a MAC PDU subheader in a fifth manner in an embodiment of the present invention;
Fig. 20 is a second schematic diagram of a format of a MAC PDU subheader in a fifth manner in an embodiment of the present invention;
Fig. 21 is a third schematic diagram of a format of a MAC PDU subheader in a fifth manner in an embodiment of the present invention;
Fig. 22 is a fourth schematic diagram of a format of a MAC PDU subheader in a fifth manner in an embodiment of the present invention;
Fig. 23 is a fifth schematic diagram of a format of a MAC PDU subheader in a fifth manner in an embodiment of the present invention;
Fig. 24 is a sixth schematic diagram of a format of a MAC PDU subheader in a fifth manner in an embodiment of the present invention;
Fig. 25 is a schematic diagram of a format of a MAC PDU in a fifth manner in an embodiment of the present invention;
Fig. 26 is a first schematic diagram of a format of a MAC PDU subheader in a sixth manner in an embodiment of the present invention;
Fig. 27 is a second schematic diagram of a format of a MAC PDU subheader in a sixth manner in an embodiment of the present invention;
Fig. 28 is a third schematic diagram of a format of a MAC PDU subheader in a sixth manner in an embodiment of the present invention;
Fig. 29 is a schematic diagram of a format of a MAC PDU in a sixth manner in an embodiment of the present invention;
Fig. 30 is a schematic diagram of a format of a newly added MAC CE in a seventh manner or a ninth manner in an embodiment of the present invention;
Fig. 31 is a schematic diagram of a format of a MAC PDU in a seventh manner in an embodiment of the present invention;
Fig. 32 is a schematic diagram of a format of a newly added MAC CE in an eighth manner in an embodiment of the present invention;
Fig. 33 is a schematic diagram of a format of a MAC PDU in an eighth manner in an embodiment of the present invention;
Fig. 34 is a schematic diagram of a format of a MAC PDU in a ninth manner in an embodiment of the present invention;
Fig. 35 is a schematic flowchart of a method of a fourth embodiment of the present invention;
Fig. 36 is a schematic diagram of a functionality structure of an eNB in an embodiment of the present invention;
Fig. 37 is a schematic diagram of a functionality structure of a UE in an embodiment of the present invention;
Fig. 38 is a schematic diagram of a structure of a UE in a fifth embodiment of the present invention; and
Fig. 39 is a schematic diagram of a structure of a network device in a sixth embodiment of the present invention.

### DESCRIPTION OF EMODIMENTS

To make objectives, technical schemes and advantages of embodiments of the present invention more clearly, a clear and complete description of technical schemes in the embodiments of the present invention will be given below, in combination with the accompanying drawings in the embodiments of the present invention. Apparently, the embodiments described below are a part, but not all, of the embodiments of the present invention. All of other embodiments, obtained by those skilled in the art based on the embodiments of the present invention without any creative efforts, fall into the protection scope of the present invention.

A control signalling transmitted on a PDCCH is transmitted by being carried on a certain physical resource. A cell with 5MHz bandwidth is used as an example, and only more than ten pieces of control signalling, generally, can be carried in one transmission time interval (Transmission Time Interval, TTI), which include uplink and downlink scheduling information at the same time. Therefore, when being averaged to uplink or downlink, only several to more than ten user equipments are scheduled simultaneously in one TTI. Additionally, in some scenes, such as in a heterogeneous network, control signalling may be transmitted only in some subframes in order to reduce inter-cell interference, in which case the number of pieces of control signalling that can be transmitted on the PDCCH would be less. Due to the limited number of pieces of control signalling, the number of user equipments which can be scheduled is limited, which limiting system capacity.

With the large use of smart devices, there are more and more services in which a small packet needs to be transmitted in a network, such as QQ, MSN, and Twitter. The data packet of these services has characteristics such as a small amount of data, a large number of packets and long interval time among the packets.

Because the number of pieces of control signaling transmitted on a PDCCH is limited, the number of scheduled data packets and UEs is limited, which limits system capacity. In addition, there are more and more services in which the small packet needs to be transmitted in the network. A basic unit for data transmission in a LTE system is a transmission block (Transmission Block, TB). One TB also refers to as one media access control protocol data unit (Media Access Control Protocol Data Unit, MAC PDU). However, because the amount of data of a small packet is small, one MAC PDU usually can not be occupied completely, and thus a padding bit needs to be carried in the MAC PDU, which limits system resource capacity.

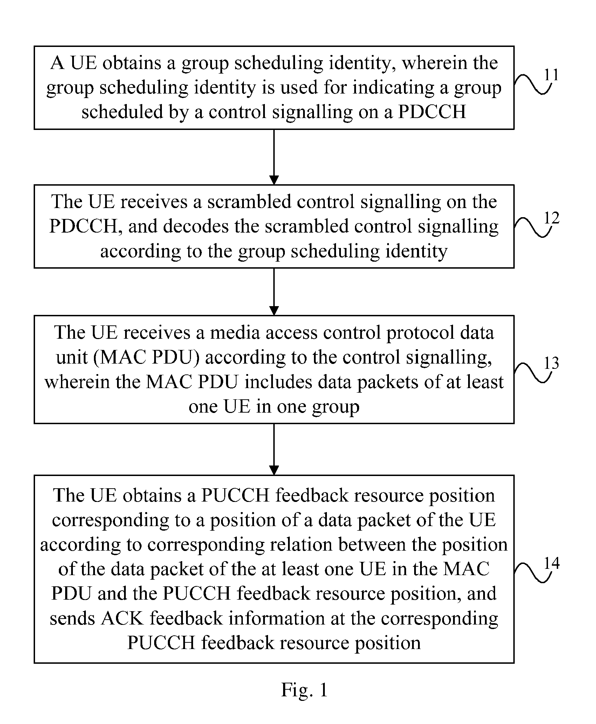

Fig. 1 is a schematic flowchart of a method of a first embodiment of the present invention, and the method includes following steps.

Step 11: A UE obtains a group scheduling identity, wherein the group scheduling identity is used for indicating a group scheduled by control signalling on a PDCCH.

Step 12: The UE receives scrambled control signalling on the PDCCH, and decodes the scrambled control signalling according to the group scheduling identity.

Specific scrambling and decoding manners may be implemented by employing conventional ones. For example, similar to processing of scrambling control signalling with a C-RNTI in the prior art, the difference of an embodiment of the present invention is scrambling with the group scheduling identity.

Step 13: The UE receives a MAC PDU according to the decoded control signalling, wherein the MAC PDU includes a data packet of at least one UE in one group.

Step 14: The UE obtains a PUCCH feedback resource position corresponding to a position of a data packet of the UE according to a corresponding relation between a position of the data packet of the at least one UE in the MAC PDU and the PUCCH feedback resource position, and sends ACK feedback information at the corresponding PUCCH feedback resource position.

In an embodiment of the present invention, the UE may specifically be a UE in a connected state, and a network side may specifically be an eNB or other network devices.

In the present embodiment, utilization efficiency of resources can be improved by encapsulating data packets of UEs which belong to one group into one MAC PDU; and more UEs can be scheduled by one piece of control signalling by including scheduling information of the UEs which belong to the one group in one piece of control signalling transmitted on a PDCCH, thereby improving the utilization ratio of the control sigalling transmitted on the PDCCH, and improving system capacity. A UE performs feedback to a base station, thereby realizing fast transmission, improving reliability of data transmission and reducing data transmission delay.

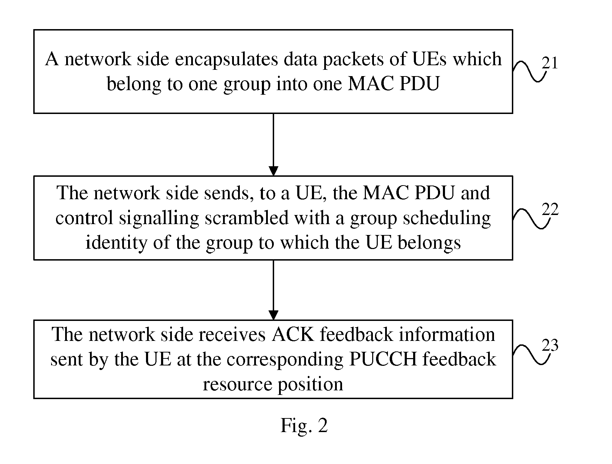

Fig. 2 is a schematic flowchart of a method of a second embodiment of the present invention, including:
Step 21: A network side encapsulates data packets of UEs which belong to one group into one MAC PDU;
Step 22: The network side sends, to a UE, the MAC PDU and control signalling scrambled with a group scheduling identity of the group to which the UE belongs, so that the UE decodes the control signalling according to the group scheduling identity, receives the MAC PDU according to the control signalling, and obtains a PUCCH feedback resource position corresponding to a position of a data packet of the UE according to a corresponding relation between a position of the data packet of at least one UE in the MAC PDU and the PUCCH feedback resource position, wherein the group scheduling identity is used for indicating the group scheduled by the control signalling on a physical downlink control channel PDCCH; and
Step 23: The network side receives ACK feedback information sent by the UE at the corresponding PUCCH feedback resource position.

In the present embodiment, efficiency of resource utilization can be improved by encapsulating data packets of UEs which belong to one group into one MAC PDU; and more UEs can be scheduled by one piece of control signalling by including scheduling information of the UEs which belong to the one group in the one piece of control signalling, thereby improving the utilization efficiency of the PDCCH, and improving system capacity. A UE performs feedback to a base station, thereby realizing fast transmission, improving reliability of data transmission and reducing data transmission delay.

In the embodiments of the present invention, a group to which a UE belongs may be obtained by grouping by a base station in advance, or UEs listening for a paging message at a same moment may belong to one group. Further, a used group scheduling identity may be pre-assigned then, or may use an identity for identifying the paging message, for example, a paging radio network temporary identity (Paging Radio network Temporary Identity, P-RNTI).

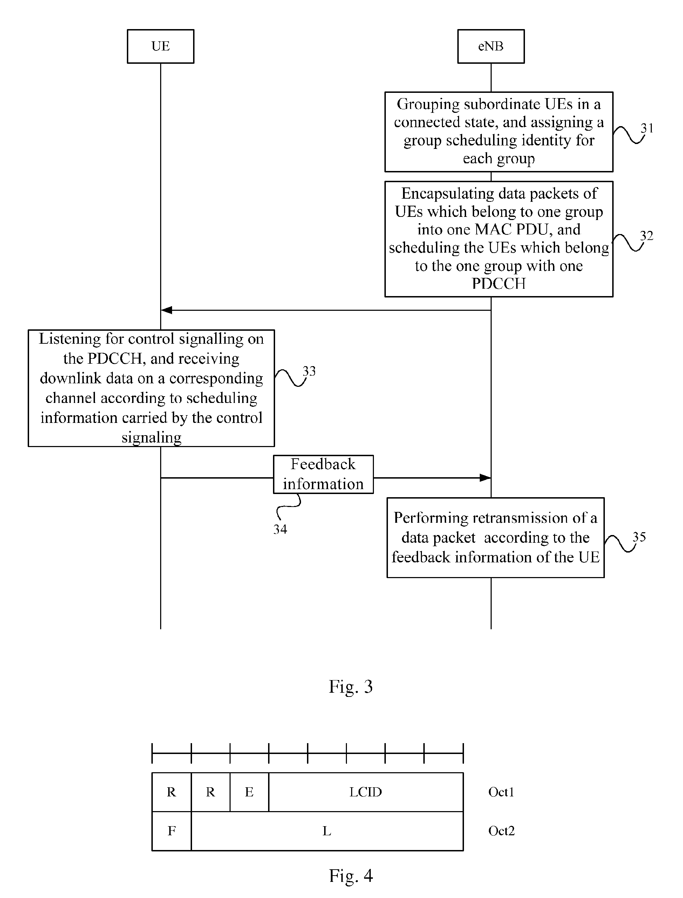

Fig. 3 is a schematic flowchart of a method of a third embodiment of the present invention. Grouping being performed by an eNB will be used as an example in the present embodiment. Referring to Fig. 3, the present embodiment includes following steps.

Step 31: The eNB groups UEs (i.e., subordinate UEs), which the eNB serve, in a connected state, and assigns one group scheduling identity for each group.

The group scheduling identity may specifically be a group radio network temporary identity (Group Radio network Temporary Identity, Group-RNTI).

The eNB may group subordinate UEs according to at least one of a downlink quality condition, a service burst condition, and a service characteristic condition. For example, a criterion of grouping the subordinate UEs by the eNB may be grouping UEs with close downlink qualities into a group, or grouping UEs with relatively intensive service bursts or UEs with similar service characteristics into a group. It should be noted that the grouping method actually used by the eNB includes, but is not limited to, the above-mentioned contents, and may be a single one thereof or a combination of some methods thereof, and so on.

After assigning the group scheduling identity, the eNB may send information, such as the group scheduling identity Group-RNTI and UE information, to the UE by carrying the information in a RRC message, wherein the UE information may be position information of the UE in the group, a serial number of the UE in the group or a UE identity.

Furthermore, in a specific grouping method, if the eNB finds that UEs which have been grouped in one group can no longer be grouped in the one group, the eNB may regroup the UEs, and amend the previous grouping information through a RRC message.

A RRC message for notifying the grouping information may be an existing RRC message, such as an RRC connection reconfiguration (RRC Connection Reconfiguration) message, or a newly added RRC message. An exiting parameter in a message, a newly added parameter or some fields in an exiting parameter may be used as a specific sending parameter for indicating the grouping information.

The names of these RRC messages and indication parameters are used merely for convenience of description, but can not define the applicable scope of the embodiments of the present invention. That is, although there are maybe not similar names in some systems, it can not be interpreted that the technical schemes of the embodiments of the present invention can not be applied to these systems.

Step 32: The eNB encapsulates, when transmitting downlink data, data packets of UEs which belong to one group into one MAC PDU, and schedules the UEs which belong to the one group with one piece of control signalling, wherein the control signalling is scrambled with the group scheduling identity Group-RNTI.

Particularly, at a certain moment, data of which UEs in the one group being encapsulated into one MAC PDU by the eNB is related to factors such as which UEs in the group have data to be scheduled, a scheduling algorithm of the eNB, and current physical resource status. For example, it is assumed that there are 10 UEs in one group, and at a certain moment, only a first and second UEs have data, and then the eNB may send data packets of the first and second UEs by encapsulating the data packets into one MAC PDU; while at another moment, all of the 10 UEs have data, but data of only 4 UEs thereof can be transmitted by physical resources, and then the eNB may send data packets of the 4 UEs thereof by encapsulating the data packets into one MAC PDU.

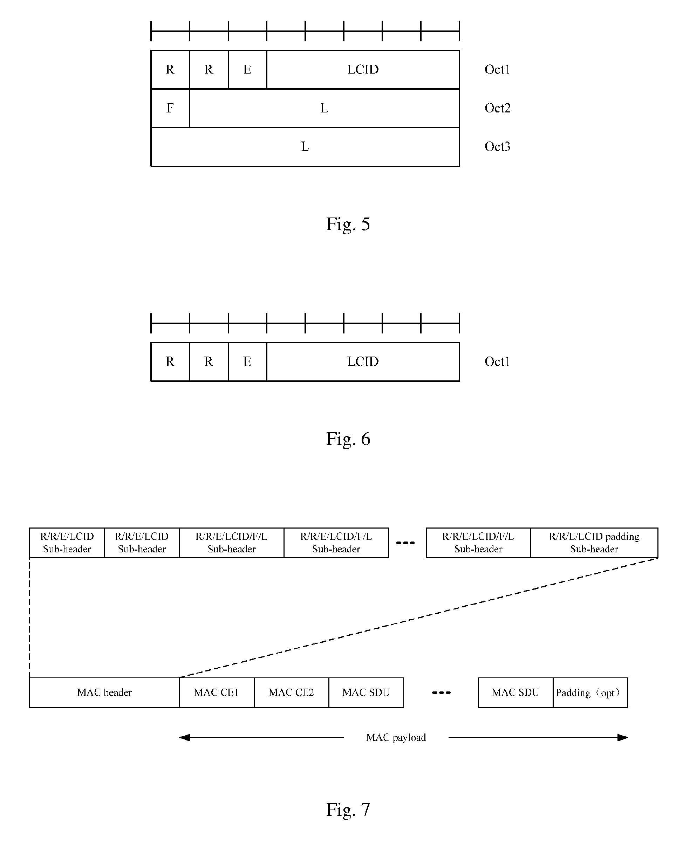

In general, a basic transmission unit of a MAC layer is one MAC PDU in one TTI. One MAC PDU consists of one MAC header (MAC header), zero or more MAC control elements (MAC Control Elements, MAC CE), zero or more MAC service data units (MAC Service Data Unit, MAC SDU), and optional data padding. One MAC header consists of one or more MAC PDU subheaders (MAC PDU subheader), wherein one MAC PDU subheader corresponds to one MAC CE or one MAC SDU or data padding. One MAC PDU subheader consists of R/R/E/LCID/F/L, but the last subheader in the MAC header or a subheader corresponding to a MAC CE with a fixed length includes only R/R/E/LCID. A specific format of one MAC PDU subheader may refer to Figs. 4-6. A format of one MAC PDU may refer to Fig. 7. A field LCID has different meanings for a MAC CE, a MAC SDU and data padding, respectively. For the MAC CE and the data padding, different LCIDs indicate different types of the MAC CE. While for a MAC SDU, the LCID represents a logical channel serial number of data carried by the SDU. Specifically, LCID meanings of a downlink shared channel are shown in Table 1.

**Table 1**

| Index | LCID values |
|---|---|
| 00000 | CCCH |
| 00001-01010 | Identity of the logical channel |
| 01011-11011 | Reserved |
| 11100 | UE Contention Resolution Identity |
| 11101 | Timing Advance Command |
| 11110 | DRX Command |
| 11111 | Padding |

In an embodiment of the present invention, data packets of the UE transmitted by means of group scheduling may be one or more MAC SDUs, or one or more MAC CEs, or one or more MAC SDUs and one or more MAC CEs, wherein the MAC CE may be an existing MAC CE in a protocol, for example, a discontinuous reception (Discontinuous Reception, DRX) command MAC CE (DRX Command MAC CE), or various new MAC CEs added in the future, such as a down link assignment (Down link Assignment) command, and an uplink resource grant (Uplink Grant).

In an embodiment of the present invention, data packets of UEs in the one group may be encapsulated into one MAC PDU by the following manners.

In a first manner, the MAC PDU includes a MAC header and a MAC payload. The MAC header includes a UE indication part for indicating whether a UE in the group has data. The UE indication part is a newly added field in the MAC header. The number of bits of the UE indication part is the same as the number of the UEs in the group, and the bits are sorted according to positions of the UEs in the group. The MAC payload includes data packets corresponding to the UEs which have data, wherein each UE that has data corresponds to one MAC CE, or each UE that has data corresponds to one MAC SDU.

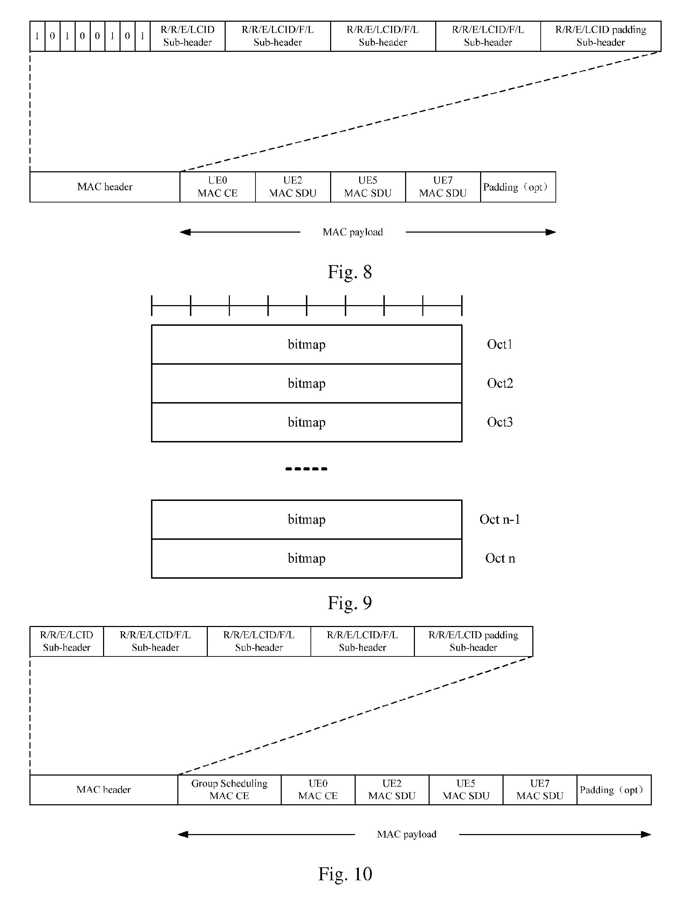

Specifically, a fixed-length bitmap indication is added. As shown in Fig. 8, the fixed-length bitmap indication is added to the beginning of the MAC header, for example 8 bits. Each bit indicates whether one UE has data, for example, it indicates that the UE has data if it is set to 1, and indicates that the UE dose not have data if it is set to 0. The total number of bits is equal to the number of UEs in the group. An order indicated by the bitmap is related to positions of UEs in the group. As shown in Fig. 8, it is indicated that UE0, UE2, UE5, and UE7 have data to be scheduled. User data of one UE thereof may be one MAC SDU, or one MAC CE. And each UE data merely includes one MAC SDU or one MAC CE.

In a second manner, the MAC PDU includes a MAC header and a MAC payload. The MAC header includes a MAC PDU subheader. The MAC payload includes an indication MAC CE and data packets correponding to UEs that have data, wherein the indication MAC CE is used for indicating whether UEs in the group have data. The number of bits in the indication MAC CE equals to the number of UEs corresponding to the largest serial number of UEs that have data in the group, and the bits are sorted according to positions of the UEs in the group.

Specifically, a variable-length bitmap indication is added. The bitmap is a MAC CE included in the MAC PDU, and is indicated with a subheader R/R/E/LCID/F/L. A group scheduling MAC CE (Group Scheduling MAC CE) is added, and a specific format of the Group Scheduling MAC CE is shown in Fig.9. Referring to Fig. 10, the difference from other MAC CEs is thata MAC PDU subheader corresponding to the group scheduling MAC CE includes fields of R/R/E/LCID/E/L in order to denote a size of the variable-length Group Scheduling MAC CE, wherein the field L indicates a length of the Group Scheduling MAC CE. The field LCID may refer to Table 2. The Group Scheduling MAC CE is in the front of all MAC CEs. User data of one UE may be one MAC SDU, or one MAC CE. Each UE data merely includes one MAC SDU or one MAC CE. An order indicated by the bitmap is related to positions of UEs in the group. The lengths of the above-mentioned BitMaps used in different groups may be the same or different. For example, there are 8 UEs in a first group, and the length of the BitMap may be 8. There are 16 UEs in a second group, and the length of the BitMap is 16. When data of different UEs in the one group are scheduled, lengths of the corresponding BitMaps may be the same or different. For example, there are 128 UEs in a group, and the length of BitMap may be set to 8 if the first eight UEs are scheduled; while if all the UEs or the last few UEs are scheduled, the length of BitMap may be set to 128. There is another manner to use a form of offset plus BitMap, in which an ID of a first scheduled UE is given firstly and the BitMap is used for the following scheduled UEs.

**Table 2**

| Index | LCID values |
|---|---|
| 00000 | CCCH |
| 00001-01010 | Identity of the logical channel |
| 01011-11010 | Reserved |
| 11011 | Group Scheduling |
| 11100 | UE Contention Resolution Identity |
| 11101 | Timing Advance Command |
| 11110 | DRX Command |
| 11111 | Padding |

In a third manner, the MAC PDU includes a MAC header and a MAC payload. The MAC header includes a UE indication part. The UE indication part is in a MAC PDU subheader included in the MAC header, and occupies reserved-bit part of the MAC PDU subheader. The reserved-bit part is used for indicating serial numbers of UEs that have data in the group. The UE indication part is used for indicating whether UEs in the group have data. The MAC payload includes data packets corresponding to UEs that have data. Each UE that has data corresponds to one or more MAC CEs at consecutive positions, or each UE that has data corresponds to one or more MAC SDUs at consecutive positions in the MAC PDU. If data packets corresponding to a UE are a plurality of data packets at consecutive positions, feedback may be configured to be performed at a fixed position, for example, feedback is performed according to a position of the first MAC SDU, or may be configured dynamically rather than limiting to a fixed position.

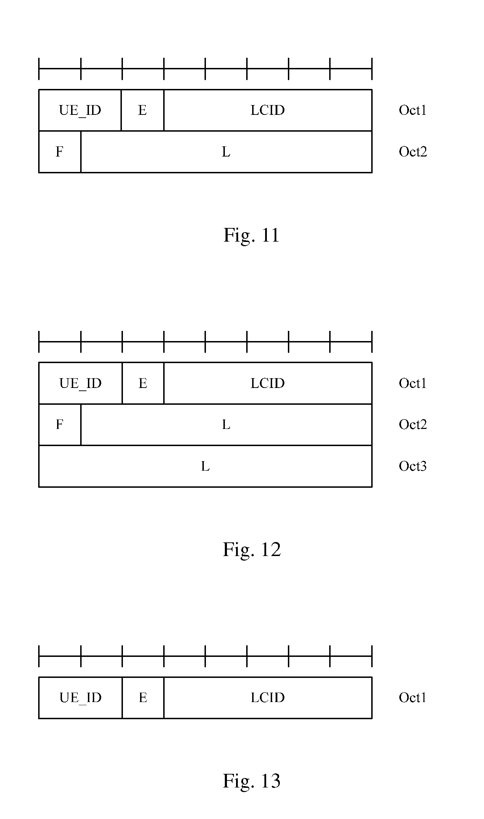

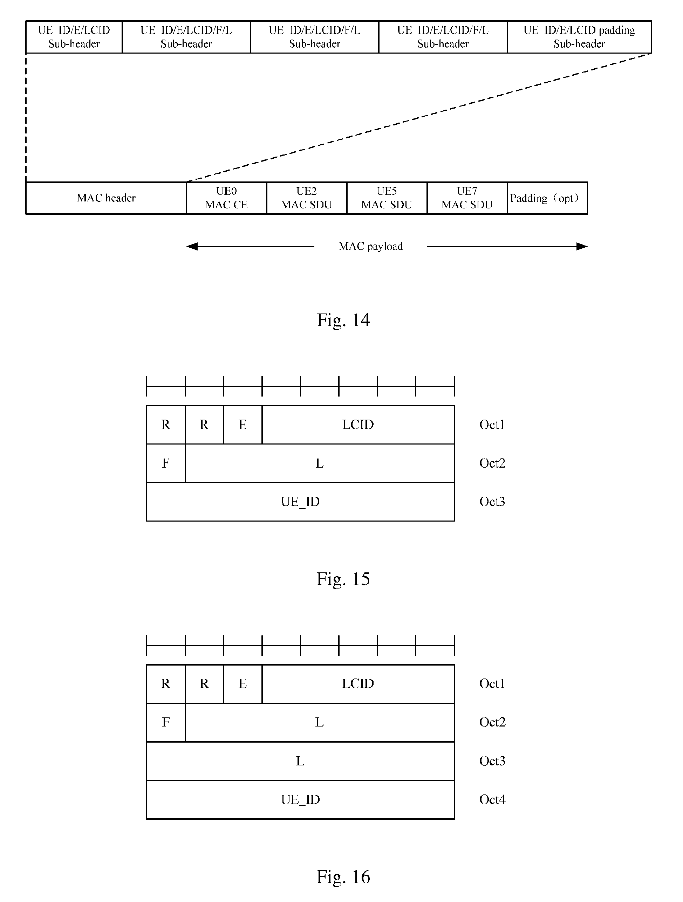

Specifically, the UE indication part is a fixed-length UE_ID (2 bits). For example, referring to Figs.11-13, two reserved bits in a current MAC PDU subheader are used as an identity of the UE_ID. Fig. 11 is a first schematic diagram of a format of a MAC PDU subheader in the third manner of an embodiment of the present invention, in which the MAC PDU subheader includes UE_ID/E/LCID/F/L (7 bits). Fig. 12 is a second schematic diagram of a format of a MAC PDU subheader in the third manner of an embodiment of the present invention, in which the MAC PDU subheader includes a UE_ID/E/LCID/F/L (15 bits). Fig. 13 is a third schematic diagram of a format of a MAC PDU subheader in the third manner of an embodiment of the present invention, in which the MAC PDU subheader includes a UE_ID/E/LCID. In the embodiments of the present invention, if there is no particular illustration, the UE_ID may be a serial number of a UE in a group, or a UE identity, for example, a C-RNTI of the UE. It is different from the first and second manners that one MAC PDU may transmit a plurality of MAC SDUs and/or MAC CEs of one UE, but each MAC SDU or MAC CE needs an independent MAC PDU subheader, i.e., a plurality of UE_IDs may be transmitted for data of the one UE. A specific format is shown in Fig. 14.

In a fourth manner, the MAC PDU includes a MAC header and a MAC payload. The MAC header includes a UE indication part. The UE indication part is a newly added field in the MAC PDU subheader. The UE indication part is in the MAC PDU subheader included in the MAC header. The UE indication part is used for indicating that a UE in a group has data by a serial number of the UE in the group. The MAC payload includes a data packet corresponding to the UE that has data, and each UE that has data corresponds to one or more MAC CEs at consecutive positions, or each UE that has data corresponds to one or more MAC SDUs at consecutive positions. It should be particularly noted that, if a plurality of data packets at consecutive positions is carried, feedback is performed at a fixed position which is configured by a protocol, for example the first MAC SDU, or configured dynamically.

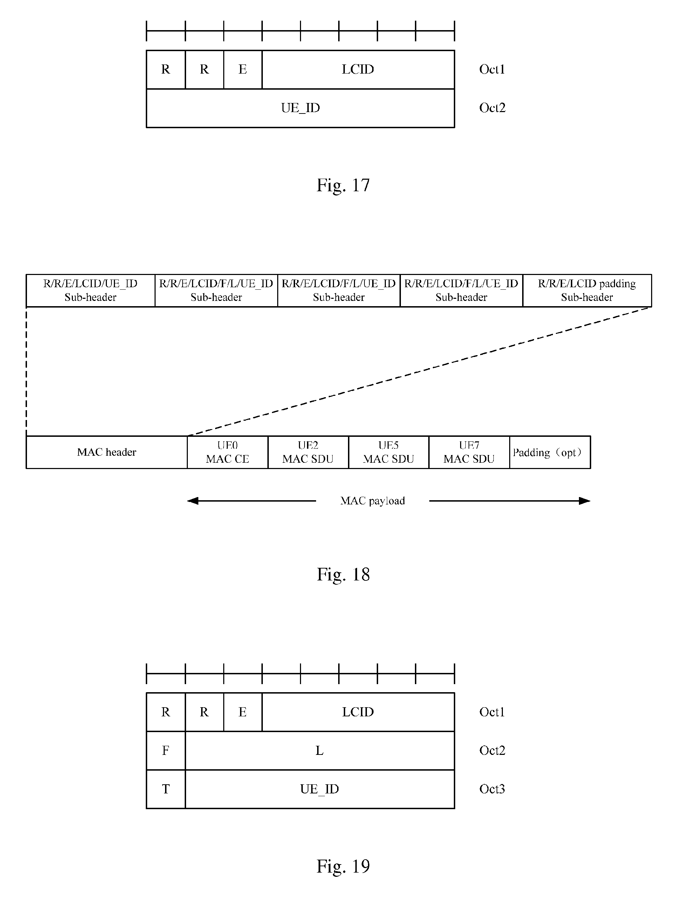

Specifically, the UE indication part is a fixed-length UE_ID (>2 bits), which may be 8bits, or 16bits or longer and depends on the number of UEs in one group. However, the format is fixed, i.e., once the number of extended bits is determined, the format is used for all group-scheduled UEs. The fixed-length UE_ID is extended behind an existing MAC subheader. For example, a UE_ID with extended 8 bits is shown in Figs. 15-17. Fig. 15 is a first schematic diagram of a format of a MAC PDU subheader in the fourth manner of an embodiment of the present invention, in which the MAC PDU subheader includes an R/R/E/LCID/F/L(7bits)/UE_ID. Fig.16 is a second schematic diagram of a format of a MAC PDU subheader in the fourth manner of an embodiment of the present invention, in which the MAC PDU subheader includes an R/R/E/LCID/F/L(15bits)/UE_ID. Fig. 17 is a third schematic diagram of a format of a MAC PDU subheader in the fourth manner of an embodiment of the present invention, in which the MAC PDU subheader includes an R/R/E/LCID/UE_ID. It is different from the first and second manners that one MAC PDU may transmit a plurality of MAC SDUs and/or MAC CEs of one UE, but each MAC SDU or MAC CE needs an independent MAC PDU subheader, i.e., a plurality of UE_IDs may be transmitted for data of the one UE. A specific format is shown in Fig. 18.

In a fifth manner, the MAC PDU includes a MAC header and a MAC payload. The MAC header includes a UE indication part. The UE indication part is in a MAC PDU subheader included in the MAC header. The UE indication part indicates that a UE in a group has data by a serial number of the UE in the group. The MAC payload includes a data packet corresponding to the UE that has data, and each UE that has data corresponds to one or more MAC CEs at consecutive positions, or each UE that has data corresponds to one or more MAC SDUs at consecutive positions. It should be particularly noted that, if a plurality of data packets at consecutive positions are carried, feedback is performed at a fixed position which is configured by a protocol, for example, the first MAC SDU, or at a position configured dynamically. The UE indication part is a newly added field in the MAC PDU subheader. The MAC PDU subheader further includes a length indication part for indicating a length of the UE indication part.

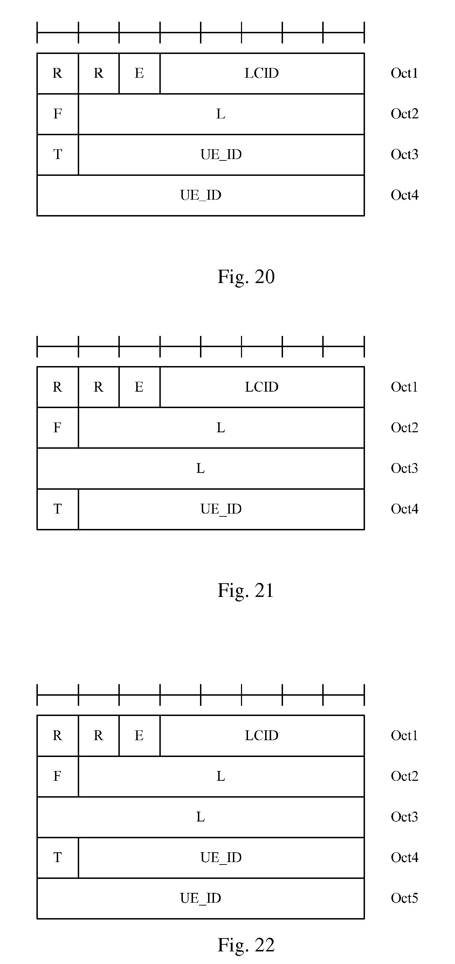

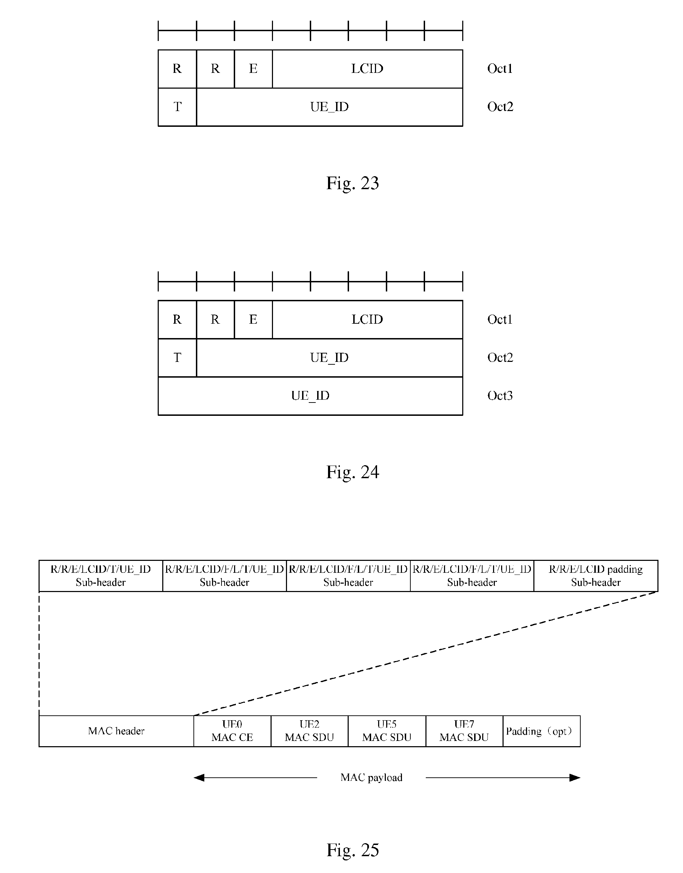

Specifically, UE_ID with two types of lengths is used, and it is identified with a field T. For example, 0 denotes a UE_ID with 7 bits, and 1 denotes a UE_ID with 15 bits. Fig. 19 is a first schematic diagram of a format of a MAC PDU subheader in the fifth manner of an embodiment of the present invention, in which the MAC PDU subheader includes an R/R/E/LCID/F/L(7bits)/T/UE_ID (7bits). Fig. 20 is a second schematic diagram of a format of a MAC PDU subheader in the fifth manner of an embodiment of the present invention, in which the MAC PDU subheader includes R/R/E/LCID/F/L(7bits)/T/UE_ID(15bits). Fig. 21 is a third schematic diagram of a format of a MAC PDU subheader in the fifth manner of an embodiment of the present invention, in which the MAC PDU subheader includes R/R/E/LCID/F/L(15bits)/T/UE_ID(7bits). Fig. 22 is a fourth schematic diagram of a format of a MAC PDU subheader in the fifth manner of an embodiment of the present invention, in which the MAC PDU subheader includes R/R/E/LCID/F/L(15bits)/T/UE_ID(15bits). Fig. 23 is a fifth schematic diagram of a format of a MAC PDU subheader in the fifth manner of an embodiment of the present invention, in which the MAC PDU subheader includes R/R/E/LCID/T/UE_ID(7bits). Fig. 24 is a sixth schematic diagram of a format of a MAC PDU subheader in the fifth manner of an embodiment of the present invention, in which the MAC PDU subheader includes R/R/E/LCID/T/UE_ID(15bits). It is different from first and second manners that one MAC PDU may transmit a plurality of MAC SDUs and/or MAC CEs of one UE, but each MAC SDU or MAC CE needs an independent MAC PDU subheader, i.e., a plurality of UE_IDs may be transmitted for data of the one UE. A specific format is shown in Fig. 25.

In a sixth manner, the MAC PDU includes a MAC header and a MAC payload. The MAC header includes a UE indication part. The UE indication part is a newly added field in the MAC PDU subheader and is in the MAC PDU subheader included in the MAC header. The UE indication part is used for indicating that a UE in a group has data by a serial number of the UE in the group. The MAC payload includes a data packet corresponding to the UE that has data. The UE indication part may indicate one MAC header and the data packet of the payload part corresponding to at least one MAC PDU subheader for one UE. Each UE that has data corresponds to one or more MAC CEs at consecutive positions, or each UE that has data corresponds to one or more MAC SDUs at consecutive positions. It should be particularly noted that, if a plurality of data packets at consecutive positions are carried, feedback is performed at a fixed position which is configured by a protocol, for example, the first MAC SDU, or configured dynamically.

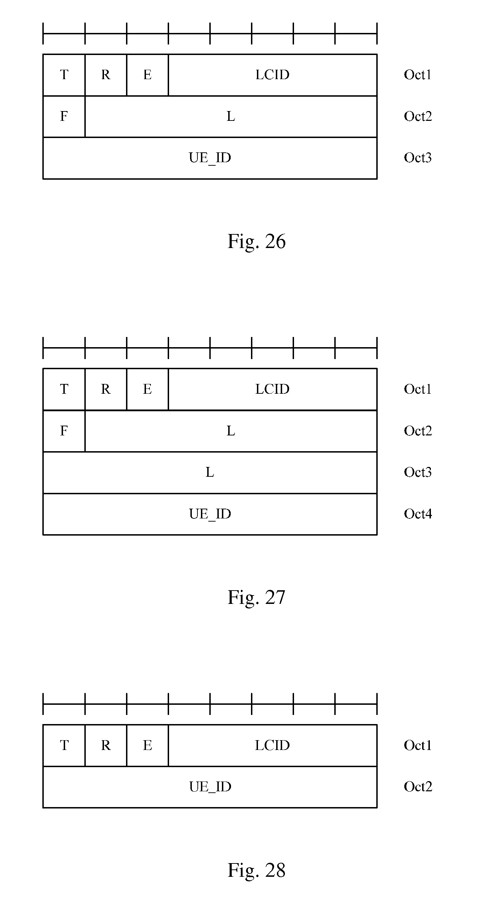

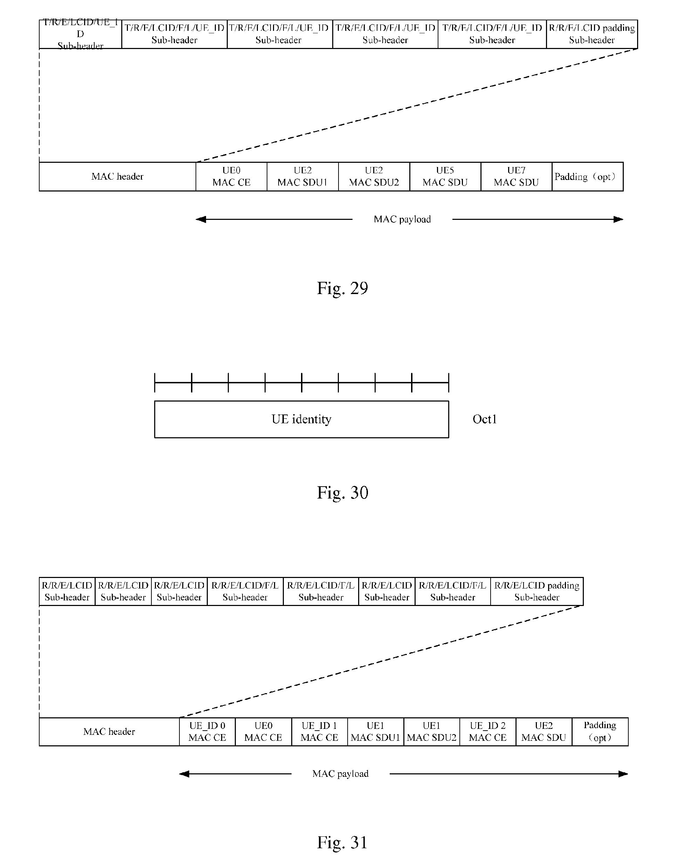

Specifically, the MAC PDU includes an optional UE_ID. That is, data of a plurality of logical channels of one UE may be transmitted with only one UE_ID. A length of the UE_ID is fixed, may be 8 bits, or 16 bits or longer, and depends on the number of UEs in one group. However, the format is fixed, i.e., once the number of extended bits is determined, the length is used for all group-scheduled UEs. The UE_ID equals to the serial number configured for the UE in the group by the eNB through a RRC message in step 31. When one UE_ID appears in the front, the UE_ID may not be carried again if the following MAC SDUs and/or MAC CEs belong to the same UE, and the UE considers that a plurality of consecutive MAC SDUs and/or MAC CEs all belongs to the UE itself. One reserved bit in the MAC subheader is used for indicating whether the UE_ID is carried in the MAC subheader, for example, fields T in Figs. 26-28, wherein it is indicated that there is a UE_ID if T is 1, and it is indicated that there is not a UE_ID if T is 0. Fig. 26 is a first schematic diagram of a format of a MAC PDU subheader in the sixth manner of an embodiment of the present invention, in which the MAC PDU subheader includes T/R/E/LCID/F/L(7bits)/T/UE_ID. Fig. 27 is a second schematic diagram of a format of a MAC PDU subheader in the sixth manner of an embodiment of the present invention, in which the MAC PDU subheader includes T/R/E/LCID/F/L(15bits)/T/UE_ID. Fig. 28 is a third schematic diagram of a format of a MAC PDU subheader in the sixth manner of an embodiment of the present invention, in which the MAC PDU subheader includes T/R/E/LCID/UE_ID. A MAC PDU in this manner may be as shown in Fig. 29.

In a seventh manner, the MAC PDU includes a MAC header and a MAC payload. The MAC header includes a MAC PDU subheader. The MAC payload includes an indication MAC CE and a data packet corresponding to a UE that has data, wherein the indication MAC CE is used for indicating whether UEs in a group have data, and the indication MAC CE is also used for indicating a serial number of the UE that has data in the group. Each UE that has data corresponds to one or more MAC CEs, or each UE that has data corresponds to one or more consecutive MAC SDUs. It should be particularly noted that, if a plurality of data packets at consecutive positions is carried, feedback is performed at a fixed position configured by a protocol, for example, the first MAC SDU, or configured dynamically. A length of the indication MAC CE is fixed; and an adjacent data packet following each indication MAC CE is one or more consecutive data packets of one UE corresponding to the indication MAC CE.

Specifically, a new fixed-length MAC CE is added to identify UE. A UE_ID is a kind of a MAC CE which is included in the MAC PDU and which is indicated by a subheader R/R/E/LCID. As shown in Fig. 30, one UE identity MAC CE (UE identity) is added. The fixed length of the UE identity MAC CE may be 8 bits, 16 bits or longer. The fixed length will be used for all group-scheduled UEs once it is determined. A field LCID included in the MAC PDU subheader corresponding to the UE identity MAC CE may refer to Table 3. It is different from other MAC CEs that the UE identity MAC CE is inserted in front of an indication MAC CE subheader and/or a MAC SDU subheader rather than in the beginning of the MAC header. When one UE identity MAC CE appears in the front, the UE_ID may not be carried again if the following MAC SDUs and/or MAC CEs belong to one UE, and the UE considers that the plurality of consecutive MAC SDUs and/or MAC CEs all belongs to the UE itself. For example, referring to Fig. 31, UE_ID 0 MAC CE and the following UE0 MAC CE correspond to UE_0, UE_ID 1 MAC CE and the following UE1 SDU1 and UE1 MAC SDU2 correspond to UE_1, and UE_ID 2 MAC CE and the following UE2 SDU1 correspond to UE_2.

**Table 3**

| Index | LCID values |
|---|---|
| 00000 | CCCH |
| 00001-01010 | Identity of the logical channel |
| 01011-11010 | Reserved |
| 11011 | UE Identity |
| 11100 | UE Contention Resolution Identity |
| 11101 | Timing Advance Command |
| 11110 | DRX Command |
| 11111 | Padding |

In an eighth manner, the MAC PDU includes a MAC header and a MAC payload. The MAC header includes a MAC PDU subheader. The MAC payload includes an indication MAC CE and a data packet corresponding to a UE that has data, wherein the indication MAC CE is used for indicating whether UEs in a group have data, and the indication MAC CE is also used for indicating a serial number of the UE that has data in the group. A length of the indication MAC CE is not fixed, and an adjacent data packet following each indication MAC CE is one or more consecutive data packets of one UE corresponding to the indication MAC CE.

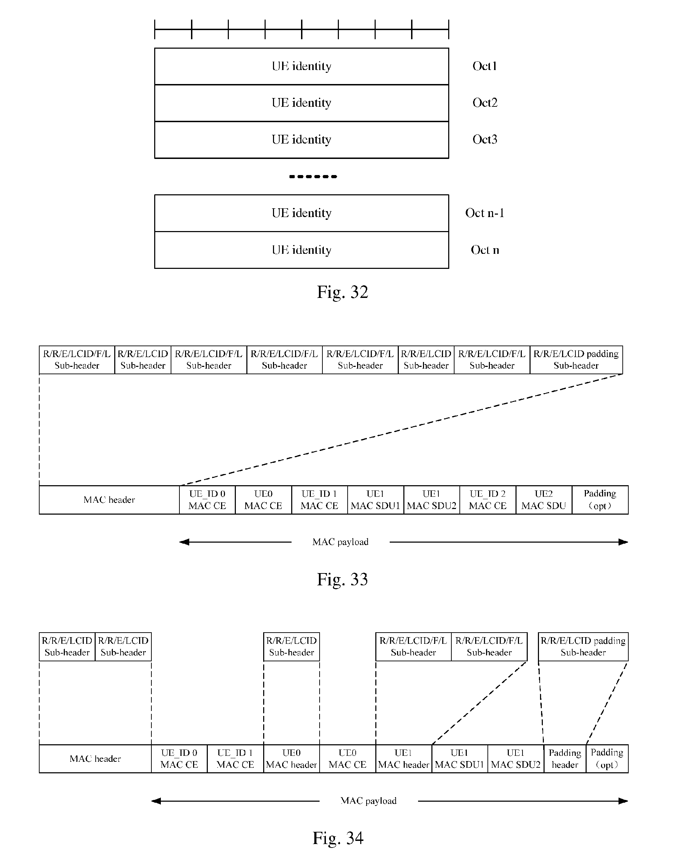

Specifically, a new variable-length MAC CE is added to identify a UE. A UE_ID is taken as a kind of a MAC CE which is included in the MAC PDU and which is indicated by a subheader R/R/E/LCID/F/L. One UE identity MAC CE (UE identity) is added, and a specific format of the MAC CE is shown in Fig. 32. A field LCID included in the MAC PDU subheader corresponding to the UE identity MAC CE may refer to Table 3. Referring to Fig. 33, it is different from other MAC CEs that a MAC PDU subheader corresponding to the UE identity MAC CE includes fields R/R/E/LCID/E/L in order to denote a size of the variable-length MAC CE, wherein the field L indicates the length of a Group Scheduling MAC CE. And the UE identity MAC CE is inserted in front of a MAC CE subheader and/or a MAC SDU subheader rather than in the beginning of the MAC header. When one UE identity MAC CE appears in the front, the UE identity may not be carried again if the following MAC SDUs and/or MAC CEs belong to one UE, and the UE considers that the plurality of consecutive MAC SDUs and/or MAC CEs all belong to the UE itself.

In a ninth manner, the MAC PDU includes a MAC header and a MAC payload. The MAC header includes a MAC PDU subheader. The MAC payload includes an indication MAC CE and a data packet corresponding to a UE that has data, wherein the indication MAC CE is used for indicating whether UEs in a group have data, and the indication MAC CE is also used for indicating a serial number of the UE that has data in the group. A length of the indication MAC CE is fixed, and a MAC CE which corresponds to the indication MAC CE is a MAC PDU of one UE.

Specifically, a new MAC CE is added to identify a UE. A UE_ID is taken as a MAC CE which is included in the MAC PDU and which is indicated by a subheader R/R/E/LCID. One UE identity MAC CE (UE identity) is added, and a specific format of the UE identity MAC CE is shown in Fig. 30. The fixed length may be 8 bits, 16 bits or longer, and the fixed length will be used for all group-scheduled UEs once it is determined. A field LCID included in the MAC PDU subheader corresponding to the UE identity MAC CE may refer to Table 3. Referring to Fig. 34, it is different from the seventh and eighth manners that each UE firstly encapsulates its one or more MAC CEs and/or one or more MAC SDUs into a MAC PDU, and then UE identity MAC CEs for indicating the UE_IDs is added in front of all these MAC PDUs according to a transmition order of the UE MAC PDUs, and subheaders for indicating these MAC CEs are added in a MAC header. Furthermore, the PDCCH may be transmitted in a common search space by the following ways.

Generally, a PDCCH occupies 4 or 8 CCEs of a common search area, which will limit the number of UEs scheduled by one PDCCH command in one TTI in an embodiment of the present invention. The objective of an embodiment of the present invention is to reduce the limitation. The specific method is described as follows.

The UE receives scrambled control signalling on the PDCCH in a common search space, wherein the number of CCEs occupied by the control signalling is a value except 4 and 8; or, the number of CCEs occupied by the common search space is a value except 16; or, the group scheduling identity received by the UE is a P-RNTI or an SI-RNTI when the UE and other UEs in a cell to which the UE belongs are in one group; or, the UE receives control signalling corresponding to a group to which the UE belongs in a configured group scheduling space, wherein the configured group scheduling space is a group scheduling space configured by a RRC message that is received by the UE, or the UE uses a group scheduling space configured statically.

In particular, even in the common search space, the number of CCEs occupied by one piece of control signalling may also be 2 or other values when group scheduling isused. For example, when the number of UEs which need to be scheduled concurrently is 2, a control signalling command which occupies two CCEs may be used for scheduling, so as to further improve the PDCCH utilization efficiency. Alternatively, the characteristic may also be applied in the common search space for specific scheduling, which can also improve the PDCCH resource utilization efficiency. For a UE of Rel-10 and later ones, its blind detecting capacity in a search space and processing capacity will be improved accordingly. Therefore, it is feasible to increase the number of times of blind detections and processings. Certainly, when there is no group scheduling, the number of CCEs occupied by control signalling in the CSS may also be extended to other numbers except 4 and 8 CCEs.

Furthermore, a size of the current common search space is 16 CCEs. In order to schedule more groups in one TTI, the size of the space may also be variable, for example, increasing from 16 CCEs to 20, or even more, but of course it can not exceed the total number of available CCEs. Theoretically, the size of the common space may also be reduced on needs. Certainly, when there is no group scheduling, the size of CSS may also be extended to the other number of CCEs except 16 CCEs.

Furthermore, in addition to using the existing common space, one group scheduling space may further be defined, and includes a space size, a position, and the like. The group scheduling space may be shared by all groups, or different groups may have different scheduling spaces. Different group spaces may overlap theoretically, and the space sizes may be the same or may be different. A group scheduling space may be configured to a specific UE belonging to a specific group by a RRC message, or may be configured statically in a protocol. When a group scheduling space is used, one control signalling command sent in the group scheduling space may occupy one or more CCEs.

A UE may join in one group or leave one group. Such operations may be realized by an RRC message or other messages. Additionally, as a specific example, all UEs in a cell may belong to one group. That is, the group is valid in the whole cell. A used group RNTI may be configured statically in a protocol, may be informed in a broadcast message, or may be configured by a RRC message or other messages. Theoretically, the existing P-RNTI for paging and/or the existing SI-RNTI for broadcast may also be used. When the P-RNTI and/or SI-RNTI are used, a UE would perform feedback according to an indication and/or on needs only when the UE receives specific data (MAC SDU or MAC CE) which belong to the UE itself. And in this case, a MAC header needs to be added for indicating which one is a paging message or broadcast message and which one is UE-specific data.

Furthermore, in general, a size of physical resources, which are occupied by one piece of control signalling transmitted on the PDCCH, in a common search space is 4 CCEs or 8 CCEs. In order to enable a scheduled UE to calculate required PUCCH resources, the number of UEs that are scheduled concurrently by the eNB is related to the number of resources occupied by the control signalling transmitted on the PDCCH. That is, no matter how many UEs there are in one group, if the resources occupied by control signalling sent by the eNB in the common search space are 4 CCEs at a certain moment, the number of UEs scheduled concurrently by the eNB in the TTI should not be greater than 4, so as to enable all UEs to calculate and use corresponding PUCCH resources for feeding back an ACK. If the resources occupied by the PDCCH are 8 CCEs, the number of UEs scheduled concurrently by the eNB in the TTI should not be greater than 8, so as to enable all UEs to calculate and use corresponding PUCCH resources for feeding back an ACK.

Step 33: The UE listens for control signalling on the PDCCH, and receives downlink data on a corresponding channel according to scheduling information carried by the control signalling.

The UE not only needs to listen for its specific control signalling in a specific search area and a common search area, but also needs to listen for control signalling in the common search area, so as to determine whether there is its own data during group scheduling.

Specifically, in addition to listening for control signalling scrambled by a C-RNTI on the PDCCH, a grouped UE also needs to listen for control signalling scrambled by its own Group-RNTI on the PDCCH to detect whether group scheduled data is sent. It should be noted that the UE does not need to listen for control signalling scrambled by its own Group-RNTI after receiving the control signalling scrambled by its own C-RNTI in general; if the UE does not successfully detect control signalling scrambled by its own C-RNTI, it needs to listen for control signalling scrambled by its own Group-RNTI. After receiving control signalling scrambled by its own Group-RNTI, the UE receives and decodes data on a PDSCH according to scheduling information indicated by the control signalling. If a MAC layer of the UE does not successfully decode a data packet, the MAC layer of the UE discards the data packet and does not need to perform HARQ feedback. However, if the data packet is decoded successfully, the UE determines whether there is its own data according to the indication in a MAC header after obtaining the MAC PDU. If there is not, the UE discards the MAC PDU and does not need to perform HARQ feedback. If there is its own data, the UE determines its relative position in the group or obtains its own data packet according to the indication of a UE_ID.

Step 34: The UE sends feedback information to the eNB on the PUCCH according to a receiving situation of downlink data.

In an LTE system, a hybrid automatic repeat request (Hybrid Automatic Repeat request, HARQ) technology is used to ensure reliable data transmission. After the eNB sends control signalling for scheduling downlink data of a UE on the PDCCH in the n-th TTI, the UE receives the downlink data on a corresponding physical downlink share channel (Physical Downlink Share Channel, PDSCH) according to the indication of the scheduling signalling, and transmits HARQ feedback on the PUCCH in the (n+k)-th TTI (k is 4 in a frequency division duplex (Frequency Division Duplex, FDD) mode, and may be other values in a time division duplex (Time Division Duplex, TDD) mode) to inform the eNB whether the data is received successfully. The PUCCH resource used by the UE is related to the physical resource occupied by the control signalling for the scheduling of this time. Specifically, a primary factor for calculating the PUCCH feedback resource of this time is a position of the first CCE (Control Channel Element, CCE) occupied by the control signalling corresponding to the scheduling of this time.

In an embodiment of the present invention, a way for calculating the PUCCH is that a UE determines its own ordering in the present scheduling, i.e., a relative position of the UE in the present scheduling, and determines CCEs corresponding to the PUCCH according to the ordering. For example, in one scheduling, sequence numbers of 4 CCEs occupied by control signalling are 1, 2, 3, and 4 respectively, and an order of scheduled UEs is UE1, UE5, UE6, and UE9. If the 4 UEs all correctly receive the downlink data packet, the 4 UEs respectively use PUCCH resources corresponding to CCEs 1, 2, 3, and 4 for ACK feedback.

The UE calculates the PUCCH resource used for HARQ feedback according to its own ordering in the present scheduling and performs ACK feedback.

For another example, the eNB may inform the UE to perform feedback on a specified PUCCH by a RRC message, specifically with the following methods.

In a first manner, the eNB further needs to inform UE of the PUCCH resource (including the number of a PUCCH and a specific physical layer resource used by each PUCCH), which is reserved for the group through the RRC message, for the UE to feed back.

The number of the reserved PUCCHs is related to the number of UEs whose data packets can be sent at one time in the group determined by the eNB. That is, if the eNB determines that data packets of 4 UEs in the group may be transmitted at one time, the number of PUCCHs reserved for the group is 4.

In a second manner, when the eNB determines to change the number of UEs whose data packets can be transmitted at one time in the group, the eNB may change the reserved PUCCH resources (including the number of a PUCCH and a specific physical layer resource used by each PUCCH) through a RRC message.

When a UE needs to perform HARQ-ACK feedback, the UE determines a PUCCH which is actually used by the UE according to its own scheduled position and the reserved PUCCH resource received through the RRC message to perform HARQ feedback. For example, serial numbers of the reserved 4 PUCCH resources are 1, 2, 3, and 4, respectively. When UE1, UE5, UE6 and UE9 are scheduled simultaneously at a certain moment, UE1 uses the PUCCH resource with serial number 1 for feedback, and UE5 uses the PUCCH resource with serial number 2 for feedback, and so on; while UE4, UE3, UE7 and UE8 are scheduled simultaneously at a next moment, UE4 uses the PUCCH resource with serial number 1 for feedback, and UE3 uses the PUCCH resource with serial number 2 for feedback, and so on.

For another example, PUCCH resources corresponding to CCEs occupied by control signalling and PUCCH resources pre-configured by a RRC message may be combined for feedback. In this way, less reserved PUCCH feedback resources may be used for scheduling more UEs. For example, if the number of the pre-configured PUCCH is 4, and the number of CCEs occupied by control signalling is 2 during group scheduling at a certain moment, then the eNB may schedule 4+2=6 UEs at one time, wherein four UEs use the pre-configured PUCCHs for feedback, and two UEs use PUCCHs corresponding to CCEs occupied by the control signalling for feedback. Specifically, which UEs use which PUCCH resources may flexibly be configured explicitly or mapped implicitly. For example, the first four scheduled UEs use the pre-configured PUCCH resources for feedback, and the last two UEs use PUCCHs corresponding to CCEs occupied by the PDCCH for feedback, and so on.

Regarding an issue of sending HARQ-ACK on a PUCCH resource by a UE, it should be noted that, in LTE Rel-10 standard, it may be configured for the UE whether PUCCH multi-antenna transmission diversity is used. If this mechanism is configured for use, 2 PUCCHs need to be occupied when the UE sends HARQ feedback on the PUCCHs. If this mechanism is not configured, only one PUCCH is occupied for feedback.For simplification, it is specified that an ordinary PUCCH transmision mechanism is applied in the case of group scheduling no matter whether the PUCCH multi-antenna transmission diversity is configured for the UE, that is, only one PUCCH is applied to send HARQ-ACK. However, when a UE in a group uses specific scheduling in a certain TTI, a specifically used PUCCH sending mechanism is implemented according to a practical configuration of the UE. That is, if the PUCCH multi-antenna transmission diversity is configured, the multi-antenna manner is used for sending; if the PUCCH multi-antenna transmission diversity is not configured, an ordinary transmission manner isused.

In the above-mentioned embodiments, the number of UEs which can be scheduled in one TTI is limited to the number of CCEs occupied by control signalling, or the number of pre-configured PUCCHs for feedback, or a sum of these two. To schedule data of more UEs, the embodiment is extended.

When the number of UEs scheduled by the eNB with control signalling in a certain TTI exceeds the number of CCEs occupied by the control signalling or the number of pre-configured PUCCHs for feedback or a sum of these two, the eNB may select one or several UEs for feedback. The eNB determines whether the corresponding data needs to be retransmitted according to feedback of this or these UEs. A specific method for selecting a UE or UEs for feedback is shown as follows.

In a first manner, according to the number of CCEs occupied by the control signalling or the number of pre-configured PUCCHs for feedback or a sum of these two, the first several UEs need to perform feedback after successfully receiving their data. That is, if a position of data of a scheduled UE in the MAC PDU can be mapped to a corresponding PUCCH, then the scheduled UE needs to perform feedback after successfully receiving the data; while if the position of data of the scheduled UE in the MAC PDU can not be mapped to a corresponding PUCCH, the scheduled UE does not perform feedback even if the scheduled UE successfully receives the data. For example, the number of CCEs occupied by the control signalling is 4, and the number of scheduled UEs is 6, then only the first four UEs can feed back, and the last two UEs can not feed back as corresponding feedback resources can not be found.

In a second manner, the eNB indicates which UE or which UEs to perform feedback, and the UEs successfully receiving data perform feedback or do not perform feedback according to an indication. An indicating method may be indicated by a RRC message, such as a specific UE_ID, and/or a relative position (e.g., an odd position, or an even position, or the first one, or the last one, etc., and other examples being omitted) of a UE in the MAC PDU. It may also be indicated in the MAC PDU by the eNB. For example, an identity for indicating whether feedback needs to be performed is identified for each scheduled UE, wherein the identity may occupy one existing reserved bit, or may be in a newly designed format.

When the UE successfully receives its own data, the UE performs feedback or do not perform feedback according to the indication.

After receiving feedback, the eNB performs subsequent operations, such as retransmission, or discarding a packet, which depend on specific implementation of the eNB. For example, the eNB indicates one or several UEs with worst channel conditions to perform feedback (by an indication, or ordered ahead). If these UEs all feed back ACK, it is considered that data of other UEs which are not indicated to perform feedback is also successfully received. Or, if all of these UEs do not feed back ACK, it is considered that data of other UEs is not successfully sent either and needs to be retransmitted. Or, if there is a UE which should feed back ACK but does not feed back ACK, operations are performed for data of all those UEs which do not feed back ACK and which can not feed back ACK, such as rescheduling and so on.

The embodiment breaks through that the number of scheduled UEs is limited by the number of CCEs occupied by control signalling, thereby further optimizing use of PDCCH and scheduling more UEs. Meanwhile, because the indication is added, a problem (with little occurancy probability) is solvable that there might be a confliction even if the corresponding feedback resource can be mapped according to a CCE position. However, a new problem raises that the eNB can not accurately know the data receiving situation of all UEs, and therefore, it is possible that packet loss (when the eNB considers that UEs which are indicated to perform feedback all give ACK) or unnecessary retransmission (when the eNB considers that UEs that are not indicated to perform feedback all do not successfully receive data) is increased. Certainly, because of the use of group scheduling, the eNB may use a relatively conservative modulation and coding mode, and meanwhile reasonably design UEs which need to perform feedback, thereby greatly reducing the possibility of incorrect judgment of the eNB.

It should be noted that the eNB may also indicate which UEs, but not all UEs, need to perform feedback, even if the number of scheduled UEs does not exceed the number of CCEs occupied by control signalling or the number of pre-configured PUCCHs for feedback or a sum of these two.

Furthermore, in addition to indicating information of which UE or which UEs need to perform feedback, the eNB may further indicate that a corresponding UE should perform feedback on a PUCCH corresponding to which CCE position, rather than necessarily choosing a PUCCH corresponding to a corresponding CCE for feedback according to the position of data of the UE in a whole MAC PDU. Similarly, in addition to indicating information of which UE or which UEs need to perform feedback, the eNB may further indicate that a corresponding UE should perform feedback on which pre-configured PUCCH, rather than necessarily choosing corresponding PUCCH for feedback according to the position of the data of the UE in the whole MAC PDU.

When one UE needs to transmit uplink data while performing feedback, the feedback may be transmitted to the eNB by being multiplexed with the uplink data.

When one MAC PDU includes a plurality of data packets of one UE, such as a plurality of MAC SDUs, a plurality of MAC CEs, or a combination of one or more MAC SDUs and one or more MAC CEs, the UE may calculate a feedback resource position by taking a position at which the first data packet appears as a reference. Certainly, a position of a data packet at other positions may also be taken as a reference. Other UEs also need to hold the same understanding on the position, and the position may be fixedly configured by a protocol or may be configured by a RRC message. When other UEs calculate their own feedback resource positions, they are only calculated once according to a per-set configuration and positions of other data packets are omitted as for data packets of a UE that has a plurality of data packets. For example, in one MAC PDU, UE1 has two data packets, and UE2 has one data packet. An order in which these data packets appear in the MAC PDU is data packet 1 of UE1, data packet 2 of UE1 and the data packet of UE2. In this case, UE1 may take data packet 1 of UE1 as a reference, and the calculated PUCCH feedback resource position is the the feedback resource which is calculated by taking a first CCE occupied by the control signalling. UE2 will omit the position of data packet 2 of UE1, or consider that the position of data packet 2 of UE1 is the same as the position of data packet 1 of UE1, that is, two data packets of UE1 occupy one position. Therefore, the calculated PUCCH feedback resource position used by UE2 is the feedback resource calculated by taking a second CCE occupied by the control signalling.

In general, a plurality of data packets of one UE appears in a consecutive order in the MAC PDU. Certainly, in theory, the plurality of data packets of the one UE may not appear consecutively in some ways for packaging the MAC PDU.

Step 35: The eNB performs retransmission of a data packet according to the feedback information of the UE.

After receiving the feedback of UEs, the eNB determines which UEs does not correctly receive the data packet, and retransmits the data packet of these UEs. During the retransmission, data of other UEs in the group may be recombined and sent simultaneously, rather than limiting to a sending combination in the last time, or may be sent separately.

Because the retransmitted data packet in this way can not be decoded together, only a time diversity gain is obtained from retransmission. Therefore, the retransmitted data packet does not need to be identified as a retransmitted packet.

Furthermore, if the eNB misunderstands an ACK as a NACK, and because the eNB knows that group scheduled UEs can only send the ACK, as long as the eNB receives a feedback, the eNB may consider the feedback as an ACK even if the eNB misunderstands the ACK as a NACK.

If the UE is in a DRX state, the UE listens for a group scheduling command only in a TTI in which the UE needs to listen for control signalling scrambled by a C-RNTI on the PDCCH (i.e., an activated state). If the UE receives its own data in the group scheduling, an Inactivity Timer (inactivity timer) would be started or restarted (i.e., an inactivated state); and if it does not receive its own data in the group scheduling, the UE may continue to perform the previous DRX operation. If grouping is performed based on the above-mentioned paging message, the UE starts or restarts an Inactivity Timer (inactivity timer) if the successfully receives its own data in the MAC PDU which includes the paging message.

A specific retransmission process may be as follows.

When the eNB performs retransmission according to feedback of one or more UEs in the group scheduling, data of other UEs in the group may be recombined and sent simultaneously, rather than limiting to a sending combination in the last time (that is, data of a new UE in the group may be added as a new combination and transmitted by the group scheduling), and may be not combined with data of other UEs and sent separately using specific resources.

If the eNB continues to schedule data of the UE and other UEs in the group in the manner of group scheduling, the number of times that each data packet of the respective UE is scheduled needs to be recorded separately. Regarding to one data packet of one UE, a counter of transmission times for the data packet will be increased by one at each time that the data packet is scheduled. Once the number of allowable MAC layer maximum transmission times is reached (the maximum transmission times is configurable, and maximum transmission times of different UEs in the group may be same or different), it is considered that MAC layer transmission fails, and the MAC layer of the eNB discards the data packet of the UE. If the data packet is a MAC SDU of one UE, retransmission of a higher layer (e.g., RLC layer) may be caused. If the data packet is a MAC layer CE of one UE, the eNB may reassemble a new MAC CE on needs and perform new transmission, and the transmission for the data packet of the UE finishes. In one MAC PDU, recorded transmission times of data packets of different UEs may be different. Further to extend, the eNB may re-schedule other data packets of a certain UE again during a recombination, that is, two or more data packets of one UE may be scheduled in one MAC PDU. In this case, transmission times needs to be recorded respectively and processed respectively for each data packet of the UE.

If an eNB, after the eNB uses the group scheduling, assigns specific downlink resources for scheduling one UE whose data packet needs to be retransmitted (i.e., to retransmit the data packet of the UE transmitted previously by the group scheduling) with a specific scheduling command, and once the specific scheduling is started to be used, the subsequent operations are exactly the same as that in the prior art (i.e., performing a HARQ new transmission and retransmission by using one HARQ process of the UE). Because the eNB has scheduled the data packet once for the UE before performing the specific scheduling, the transmission times of the data packet of the UE using the group scheduling may be taken into account when transmission times in the MAC layer is calculated. Similarly, it should be easily understood that, the eNB may also transmit data of one UE again using the specific scheduling after scheduling the data several times by means of group scheduling, and the processing method is the same. For example, if the number of maximum transmission times of HARQ configured for the MAC layer is 4, and if a certain data packet of a certain UE is transmitted for N times by means of group scheduling, then N may be 1, 2, 3, or 4. If N is smaller than 4 and the transmission of the data packet fails, then the eNB may continue to transmit the data packet by means of the group scheduling, or may transmit the data packet by means of the specific scheduling. For example, if N=1, transmission of the data may be further performed for three times when specific scheduling is used; and if N=2, transmission may be further performed for two times when the specific scheduling is used; and so on. If the number of accumulated times that the group scheduling and/or the specific scheduling are used reaches 4, the MAC layer would discard the data packet and consider that the HARQ transmission fails, and retransmission of a high layer (e.g., a RLC layer) may be caused.

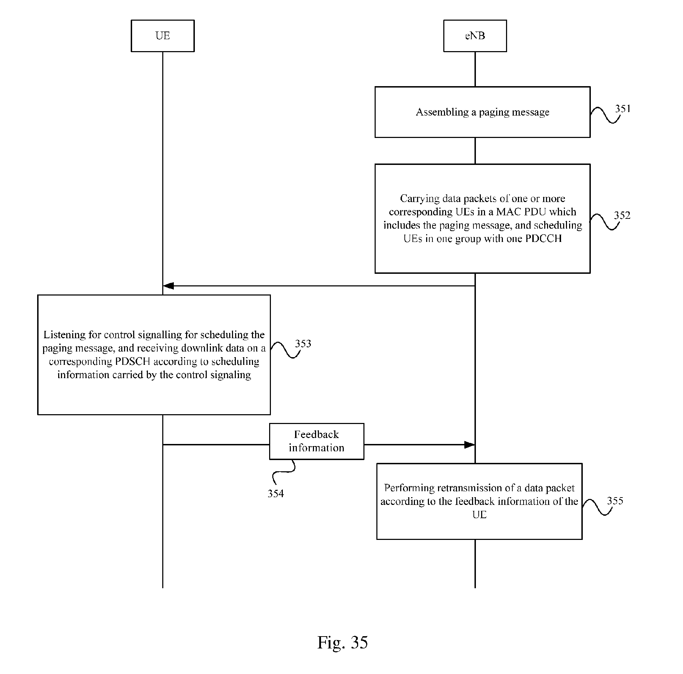

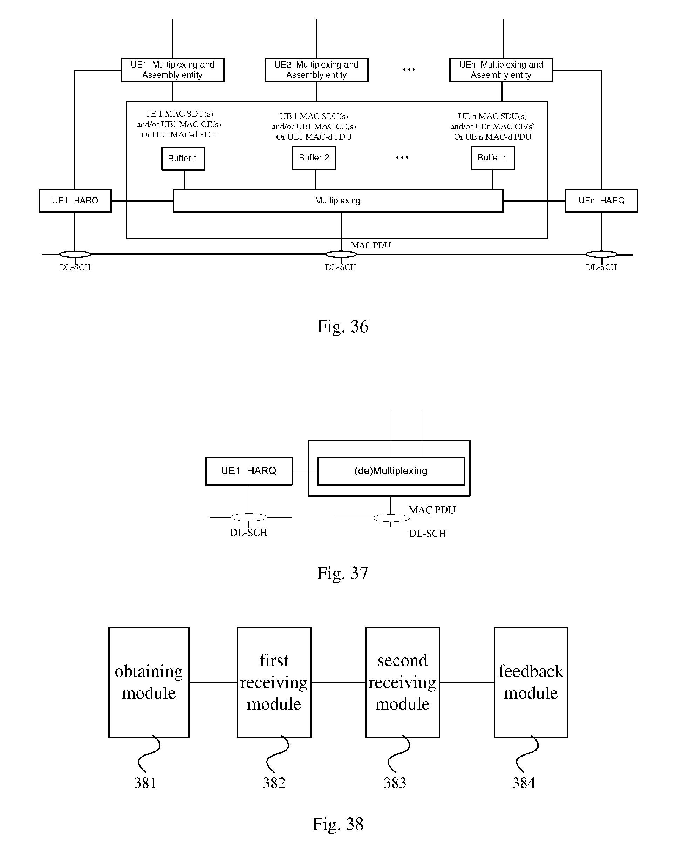

Fig. 35 is a schematic flowchart of a method of a fourth embodiment of the present invention. In the present embodiment, an example of UEs corresponding to a paging message being in one group isused. Referring to Fig. 36, the present embodiment includes the following steps.

Step 351: An eNB assembles a paging message.

Step 352: The eNB carries data packets of one or more corresponding UEs in a MAC PDU which includes the paging message, and schedules UEs in one group with one piece of control signalling transmitted on a PDCCH (i.e., these UEs need to receive the paging message in this case), wherein the control signalling carries a group identity P-RNTI corresponding to the paging message.

In the present embodiment, the group and corresponding Group-RNTI may not be pre-configured, and data of one or more UEs may be carried in the MAC PDU which includes the paging message. Specific manners of encapsulating the MAC PDU may refer to the third embodiment.

Step 353: The UE listens for control signalling for scheduling the paging message, and receives downlink data on a corresponding PDSCH according to scheduling information carried by the control signalling.

Step 354: The UE sends feedback information to the eNB on a PUCCH according to a downlink data receiving situation.

The UE which has received the data maps, according to a relative position (except the paging message) of its data in the MAC PDU which includes the paging message, feedback to an uplink feedback resource corresponding to CCEs which correspond to the control signalling used for scheduling the paging message to perform feedback. Because an ACK is fed back only when the data is decoded successfully, if the data is not decoded successfully, then the UE does not know whether there is its data and does no perform feedback. Similarly, the used uplink PUCCH feedback resource may be pre-configured, or may also be a combination of these two.

Step 355: The eNB performs retransmission of a data packet according to the feedback information of the UE.

If the eNB does not receive the feedback of the UE, the UE considers that the data of the UE is sent unsuccessful, and may perform retransmission by means of the specific scheduling.

Specific contents of the above-mentioned steps 353-355 may refer to the third embodiment.

If the UE is in a DRX state, and if the UE receives its own data in the paging message, then the UE starts or restarts an Inactivity Timer. If the UE does not receive its own data, the UE continues to perform previous DRX operations.

In the above-mentioned embodiment, because the group scheduling is introduced and has some influences on a format of the MAC layer of the eNB, the influences on the eNB are described in this embodiment.

In a first influence, one counter of transmission times needs to be maintained for data of each UE (the data may be a MAC SDU of the UE, or a MAC CE, or a combination of one or more MAC SDUs and/or one or more MAC CEs). As described in the above-mentioned embodiments, if there are a plurality of data of the UE, transmission times need to be recorded separately, as their transmission times may be different.

In a second influence, one cache is needed for storing data of each UE (the data may be MAC SDUs of the UE, or MAC CEs of the UE, or a combination of one or more MAC SDUs and/or one or more MAC CEs of the UE), and is associated with one counter of transmission times. As described in the above-mentioned embodiments, if there is a plurality of data of the UE, they need to be cached seperately, and be associated with one counter of transmission times separately.

In a third influence, regarding to data of each UE, when the group scheduling is combined with the specific scheduling in the prior art, transmission times by means of the group scheduling needs to be combined with HARQ transmission times by means of the specific scheduling. That is, previous transmission times by means of the group scheduling need to be accumulated into subsequent transmission times by means of the specific scheduling to ensure that the total number of sending times of the data in the MAC layer is the same as the number of maximum HARQ transmission times configured for the UE, i.e., to ensure transmission delay of the MAC layer.

In a fourth influence, the number of maximum times for data transmission by means of the group scheduling may be the same as the number of maximum HARQ transmission times configured for the UE, or may be configured separately.

General functionality models may refer to Fig. 36 and Fig. 37.

Fig. 38 is a schematic diagram of a structure of a UE in a fifth embodiment of the present invention. The UE includes an obtaining module 381, a first receiving module 382, a second receiving module 383 and a feedback module 384. The obtaining module 381 is configured to obtain a group scheduling identity, wherein the group scheduling identity is used for indicating a group scheduled by control signalling on a PDCCH. The first receiving module 382 is configured to receive scrambled control signalling on the PDCCH, and decode the scrambled control signalling according to the group scheduling identity obtained by the obtaining module. The second receiving module 383 is configured to receive a MAC PDU according to the decoded control signalling received by the first receiving module, wherein the MAC PDU includes a data packet of at least one UE in the one group.The feedback module 384 is configured to obtain a PUCCH feedback resource position corresponding to a position of the data packet of the UE according to a corresponding relation between a position of the data packet of the at least one UE in the MAC PDU received by the second receiving module and the PUCCH feedback resource position, and send ACK feedback information at the corresponding PUCCH feedback resource position.

The first receiving module 382 is specifically configured to receive scrambled control signalling on the PDCCH in a common search space, wherein the number of CCEs occupied by the scrambled control signalling is a value except 4 and 8; or, the number of CCEs occupied by the common search space is a value except 16; or, the group scheduling identity received by the UE is a P-RNTI or a SI-RNTI when the UE and other UEs in a cell to which the UE belongs are in the one group; or, the control signalling corresponding to the group to which the UE belongs is received in a configured group scheduling space, wherein the configured group scheduling space is a group scheduling space configured by a RRC message received by the UE, or a group scheduling space that is used by the UE and is configured statically.

A decoding module may further be included and is configured to successfully decode the MAC PDU received by the second receiving module, wherein the successfully decoded MAC PDU includes the data packet of the UE.

A discarding module may further be included and is configured to discard the MAC PDU received by the second receiving module if the UE does not successfully decode the MAC PDU or the successfully decoded MAC PDU does not include a data packet of the UE.

The obtaining module 381 is specifically configured to receive a RRC message, wherein the RRC message carries the group scheduling identity assigned for the UE by a network side; or, receive a paging message, wherein the paging message carries a group identity corresponding to the paging message, and take the group identity corresponding to the paging message as the group scheduling identity; or, obtain the group scheduling identity according to pre-configured information.

In the present embodiment, efficiency of resource utilization can be improved by encapsulating data packets of UEs which belong to one group into one MAC PDU; and more UEs can be scheduled by one piece of control signalling by including scheduling information of the UEs which belong to the one group in the one piece of control signalling, thereby improving the utilization efficiency of the PDCCH, and improving system capacity. A UE performs feedback to a base station, thereby realizing fast transmission, improving reliability of data transmission and reducing data transmission delay.

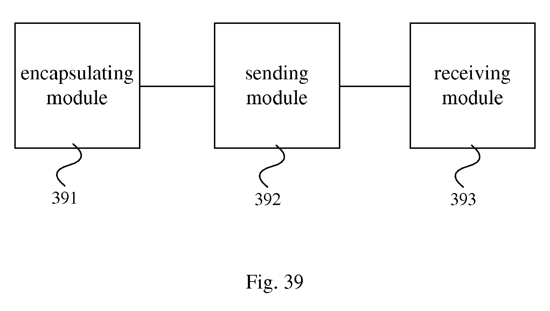

Fig. 39 is a schematic diagram of a structure of a network device in a sixth embodiment of the present invention. The network device includes an encapsulating module 391, a sending module 392 and a receiving module 393. The encapsulating module 391 is configured to encapsulate a data packet of a UE which belong to one group into one MAC PDU. The sending module 392 is configured to send, to a UE, the MAC PDU obtained by the encapsulating module and control signalling scrambled with a group scheduling identity of the group to which the UE belongs, so that the UE decodes the control signalling according to the group scheduling identity, receives the MAC PDU according to the control signalling, and obtains a PUCCH feedback resource position corresponding to a position of the data packet of the UE according to a corresponding relation between the position of the data packet of at least one UE in the MAC PDU and the PUCCH feedback resource position, wherein the group scheduling identity is used for indicating the group scheduled by the control signalling on a physical downlink control channel (PDCCH). The receiving module 393 is configured to receive ACK feedback information sent by the UE to which the sending module sends the MAC PDU at the corresponding PUCCH feedback resource position.

A grouping module may furter be included and is configured to group UEs in a connected state to obtain at least one group; or, group UEs simultaneously listening for a paging message into one group, so that the encapsulating module encapsulates data packets of UEs which belong to the one group into one MAC PDU.

A retransmitting module may further be included and is configured to determine a data packet which is not correctly received and retransmit the data packet which is not correctly received by the UE, if the receiving module does not receive the ACK feedback information sent by the UE. The retransmitting module may be specifically configured to record the number of scheduling times for each data packet of each UE, wherein the data packet of the UE is discarded by a MAC layer when the number of retransmission times reaches the number of allowable maximum transmission times, and the number of scheduling times is updated with a sum of the number of scheduling times by means of group scheduling and the number of scheduling times by means of specific scheduling; and the data packet which is not correctly received by the UE is retransmitted according to the feedback information, wherein the retransmitted data packet is retransmitted by means of group scheduling or by means of specific scheduling, and during a retransmission by means of group scheduling, data packets of the UE is combined according to the original group or the data packets of the UE are recombined.

In the present embodiment, efficiency of resource utilization can be improved by encapsulating data packets of UEs which belong to one group into one MAC PDU; and more UEs can be scheduled by one piece of control signalling by including scheduling information of the UEs which belong to the one group in the one piece of control signalling, thereby improving the utilization efficiency of the PDCCH, and improving system capacity. A UE performs feedback to a base station, thereby realizing fast transmission, improving reliability of data transmission and reducing data transmission delay.

It should be understood that, related features in the above-mentioned methods and equipments may refer to each other. Additionally, the "first", "second" and so on, in the above-mentioned embodiments are used for distincting the respective embodiments, rather than denoting preference of the respective embodiments.

It should be appreciated for those of ordinary skill in the art that all or a part of the procedures in the above-mentioned embodiments of a method may be implemented with a computer program instructing corresponding hardware. The above-mentioned program may be stored in a computer readable storage medium. The procedures of the embodiments of the respective methods mentioned above may be included when the program is executed; and the above-mentioned storage medium includes various kinds of medium that may store program codes, such as a ROM, a RAM, a magnetic disk, an optical disk, or the like.

In the end, it should be noted that the preceding embodiments are only used to illustrate the technical schemes of the present invention rather than limiting the present invention; though the present invention is illustrated in detail by referring to the preceding embodiments, it should be understood by those of ordinary skill in the art that modifications may still be made on the technical schemes disclosed in the preceding respective embodiments, or equivalent alterations may be made to a part of technical characteristics thereof; and these modifications or alterations do not make the nature of corresponding technical schemes departure from the scope of the technical schemes of the respective embodiments of the present invention.

## Claims

1. A group-based scheduling method, comprising:
obtaining (11), by a UE, a group scheduling identity, wherein the group scheduling identity is used for indicating a group scheduled by control signalling on a physical downlink control channel, PDCCH;
receiving (12), by the UE, scrambled control signalling on the PDCCH, and decoding the scrambled control signalling according to the group scheduling identity;
receiving (13), by the UE, a media access control protocol data unit, MAC PDU, according to the decoded control signalling, wherein the MAC PDU comprises a data packet of at least one user equipment, UE, in one group; and
obtaining (14), by the UE, a physical uplink control channel, PUCCH, feedback resource position corresponding to a position of a data packet of the UE according to a corresponding relation between a position of the data packet of the at least one UE in the MAC PDU and the PUCCH feedback resource position, and sending ACK feedback information at the corresponding PUCCH feedback resource position.

2. The method according to claim 1, wherein obtaining, by the UE, the group scheduling identity, comprises:
receiving, by the UE, a radio resource control, RRC, message, wherein the RRC message carries the group scheduling identity assigned for the UE by a network side; or
receiving, by the UE, a paging message, wherein the paging message carries a group identity corresponding to the paging message, and taking the group identity corresponding to the paging message as the group scheduling identity; or
obtaining, by the UE, the group scheduling identity according to pre-configured information.

3. The method according to claim 1, wherein the corresponding relation between the position of the data packet of the at least one UE and the PUCCH feedback resource position comprises at least one of:
a corresponding relation among the position of the data packet of the at least one UE, a CCE used for sending the control signalling and the PUCCH feedback resource position; and
a corresponding relation between the position of the data packet of the at least one UE and a pre-configured PUCCH feedback resource position.

4. The method according to claim 1, wherein receiving, by the UE, the scrambled control signalling on the PDCCH, comprises:
receiving, by the UE, the scrambled control signalling on the PDCCH in a common search space, wherein the number of CCEs occupied by the scrambled control signalling is a value except 4 and 8; or, the number of CCEs occupied by the common search space is a value except 16; or, the group scheduling identity received by the UE is a P-RNTI or an SI-RNTI when the UE and other UEs in a cell to which the UE belongs are in the one group; or
receiving, by the UE, the control signalling corresponding to the group to which the UE belongs in a configured group scheduling space, wherein the configured group scheduling space is a group scheduling space configured by a RRC message received by the UE, or a group scheduling space that is used by the UE and is configured statically.

5. The method according to claim 1, wherein the number of scheduled UEs corresponding to the data packet comprised in the MAC PDU is smaller than or equal to the number of CCEs occupied by the control signalling; or, the number of scheduled UEs corresponding to the data packet comprised in the MAC PDU is greater than the number of CCEs occupied by the control signalling, and the UE which sends the ACK feedback information is a UE which needs to perform feedback.

6. The method according to claim 5, wherein,
a sequence number of the data packet, corresponding to the UE which needs to perform feedback, in the MAC PDU is smaller than or equal to the number of CCEs occupied by the control signalling; or
the UE which needs to perform feedback is a UE which needs to perform feedback and is specified in the MAC PDU.

7. The method according to claim 1, wherein after receiving the MAC PDU, the method further comprises:
successfully decoding, by the UE, the MAC PDU, wherein the successfully decoded MAC PDU comprises the data packet of the UE.

8. The method according to claim 1, wherein after receiving the MAC PDU, the method further comprises:
discarding, by the UE, the MAC PDU, if the UE does not successfully decode the MAC PDU or the successfully decoded MAC PDU does not comprise a data packet of the UE.

9. A group-based scheduling method, comprising:
encapsulating (21), by a network side, data packets of UEs which belong to one group into one MAC PDU;
sending (22), by the network side, to a UE, the MAC PDU and control signalling scrambled with a group scheduling identity of the group to which the UE belongs, so that the UE decodes the control signalling according to the group scheduling identity, receives the MAC PDU according to the control signalling, and obtains a PUCCH feedback resource position corresponding to a position of a data packet of the UE according to a corresponding relation between a position of the data packet of at least one UE in the MAC PDU and the PUCCH feedback resource position, wherein the group scheduling identity is used for indicating the group scheduled by the control signalling on a physical downlink control channel, PDCCH; and
receiving (23), by the network side, ACK feedback information sent by the UE at the corresponding PUCCH feedback resource position.

10. The method according to claim 9, wherein the method further comprises:
grouping, by the network side, UEs in a connected state to obtain at least one group; or
grouping, by the network side, the UEs listening for a paging message simultaneously into the one group.

11. The method according to claim 10, wherein grouping, by the network side, the UEs in the connected state to obtain the at least one group comprises:
grouping the UEs in the connected state according to at least one of a downlink quality condition, a service burst condition, and a service characteristic condition.

12. The method according to claim 9, wherein the method further comprises:
determining, by the network side, a data packet which is not correctly received and retransmitting the data packet which is not correctly received by the UE, if the network side does not receive the ACK feedback information which is sent by the UE;
wherein retransmitting the data packet which is not correctly received by the UE comprises:
recording, by the network side, the number of scheduling times for each data packet of each UE, wherein a data packet of the UE is discarded by a MAC layer when the number of times of retransmission reaches the number of allowable maximum transmission times, and the number of scheduling times is updated with a sum of the number of scheduling times by means of group scheduling and the number of scheduling times by means of specific scheduling; and
retransmitting, by the network side, the data packet which is not correctly received by the UE according to the feedback information, wherein the retransmitted data packet is retransmitted by means of the group scheduling or by means of the specific scheduling, and during a retransmission by means of the group scheduling, the data packet of the UE is combined according to the original group or the data packets of the UE is recombined.

13. The method according to claim 9, further comprising:
configuring, by the network side, a PUCCH multi-antenna transmission diversity for the UE, wherein the PUCCH is one multi-antenna transmission diversity.

14. A user equipment, UE, comprising:
an obtaining module (381), configured to obtain a group scheduling identity, wherein the group scheduling identity is used for indicating a group scheduled by control signalling on a physical downlink control channel, PDCCH;
a first receiving module (382), configured to receive scrambled control signalling on the PDCCH, and decode the scrambled control signalling according to the group scheduling identity obtained by the obtaining module (381);
a second receiving module (383), configured to receive a media access control protocol data unit, MAC PDU, according to the decoded control signalling received by the first receiving module (382), wherein the MAC PDU comprises a data packet of at least one UE in one group; and
a feedback module (384), configured to obtain a physical uplink control channel, PUCCH, feedback resource position corresponding to a position of a data packet of the UE according to a corresponding relation between a position of the data packet of the at least one UE in the MAC PDU received by the second receiving module (383) and the PUCCH feedback resource position, and send ACK feedback information at the corresponding PUCCH feedback resource position.

15. The UE according to claim 14, wherein the obtaining module (381) is specifically configured to:
receive a radio resource control, RRC, message, wherein the RRC message carries the group scheduling identity assigned for the UE by a network side; or
receive a paging message, wherein the paging message carries a group identity corresponding to the paging message, and take the group identity corresponding to the paging message as the group scheduling identity; or
obtain the group scheduling identity according to pre-configured information.

16. The UE according to claim 14, wherein the first receiving module (382) is specifically configured to:
receive the scrambled control signalling on the PDCCH in a common search space, wherein the number of CCEs occupied by the scrambled control signalling is a value except 4 and 8; or, the number of CCEs occupied by the common search space is a value except 16; or, the group scheduling identity received by the UE is a P-RNTI or an SI-RNTI when the UE and other UEs in a cell to which the UE belongs are in the one group; or
receive the scrambled control signalling corresponding to the group to which the UE belongs in a configured group scheduling space, wherein the configured group scheduling space is a group scheduling space configured by a RRC message received by the UE, or a group scheduling space that is used by the UE and is configured statically.

17. The UE according to claim 14, wherein the UE further comprises:
a decoding module, configured to successfully decode the MAC PDU received by the second receiving module (383), wherein the successfully decoded MAC PDU comprises the data packet of the UE.

18. The UE according to Claim 14, wherein the UE further comprises:
a discarding module, configured to discard the MAC PDU received by the second receiving module (383) if the UE does not successfully decode the MAC PDU or the successfully decoded MAC PDU does not comprise the data packet of the UE.

19. A network device, comprising:
an encapsulating module (391), configured to encapsulate data packets of UEs which belong to one group into one MAC PDU;
a sending module (392), configured to send, to a UE, the MAC PDU obtained by the encapsulating module (391) and control signalling scrambled with a group scheduling identity of the group to which the UE belongs, so that the UE decodes the control signalling according to the group scheduling identity, receives the MAC PDU according to the control signalling, and obtains a PUCCH feedback resource position corresponding to a position of a data packet of the UE according to a corresponding relation between the position of the data packet of at least one UE in the MAC PDU and the PUCCH feedback resource position, wherein the group scheduling identity is used for indicating the group scheduled by the control signalling on a physical downlink control channel, PDCCH; and
a receiving module (393), configured to receive ACK feedback information sent by the UE to which the sending module (392) sends the MAC PDU at the corresponding PUCCH feedback resource position.

20. The network device according to claim 19, wherein the network device further comprises:
a grouping module, configured to group UEs in a connected state, and obtain at least one group; or, group the UEs listening for a paging message simultaneously into the one group, so that the encapsulating module (391) encapsulates the data packets of the UEs which belong to the one group into the one MAC PDU.

21. The network device according to claim 19, wherein the network device further comprises:
a retransmitting module, configured to determine a data packet which is not correctly received and retransmit the data packet which is not correctly received by the UE, if the receiving module (393) does not receive the ACK feedback information sent by the UE.

22. The network device according to claim 19, wherein the retransmitting module is specifically configured to record the number of scheduling times for each data packet of each UE, wherein a data packet of the UE is discarded by a MAC layer when the number of times of retransmission reaches the number of allowable maximum transmission times, and the number of scheduling times is updated with a sum of the number of scheduling times by means of group scheduling and the number of scheduling times by means of specific scheduling; and the data packet which is not correctly received by the UE is retransmitted, wherein the retransmitted data packet is retransmitted by means of the group scheduling or by means of the specific scheduling, and during a retransmission by means of the group scheduling, the data packet of the UE is combined according to the original group or the data packet of the UE is recombined.

## Patentansprüche

1. Gruppenbasiertes Planungsverfahren, das Folgendes umfasst:
Erhalten (11), durch ein UE, einer Gruppenplanungsidentität, wobei die Gruppenplanungsidentität zum Angeben einer Gruppe verwendet wird, die durch Steuersignalisierung auf einem physikalischen Abwärtsstreckensteuerkanal, PDCCH, geplant ist;
Empfangen (12), durch das UE, einer verwürfelten Steuersignalisierung auf dem PDCCH und Decodieren der verwürfelten Steuersignalisierung gemäß der Gruppenplanungsidentität;
Empfangen (13), durch das UE, einer Medienzugangssteuerungs-Protokolldateneinheit, MAC-PDU, gemäß der decodierten Steuersignalisierung,
wobei die MAC-PDU ein Datenpaket wenigstens eines Anwendergeräts, UE, in einer Gruppe umfasst; und
Erhalten (14), durch das UE, einer Rückmeldungsbetriebsmittelposition eines physikalischen Aufwärtsstreckensteuerkanals, PUCCH-Rückmeldungsbetriebsmittelposition, die einer Position eines Datenpakets des UE gemäß einer Zuordnungsbeziehung zwischen einer Position des Datenpakets des wenigstens einen UE in der MAC-PDU und der PUCCH-Rückmeldungsbetriebsmittelposition entspricht, und Senden von ACK-Rückmeldungsinformationen an der entsprechenden PUCCH-Rückmeldungsbetriebsmittelposition.

2. Verfahren nach Anspruch 1, wobei das Erhalten, durch das UE, der Gruppenplanungsidentität Folgendes umfasst:
Empfangen, durch das UE, einer Funkbetriebsmittelsteuerungsnachricht, RRC-Nachricht, wobei die RRC-Nachricht die Gruppenplanungsidentität, die für das UE durch eine Netzseite zugewiesen ist, führt; oder
Empfangen, durch das UE, einer Suchnachricht, wobei die Suchnachricht eine Gruppenidentität führt, die der Suchnachricht entspricht, und Verwenden der Gruppenidentität, die der Suchnachricht entspricht, als die Gruppenplanungsidentität; oder
Erhalten, durch das UE, der Gruppenplanungsidentität gemäß vorkonfigurierten Informationen.

3. Verfahren nach Anspruch 1, wobei die Zuordnungsbeziehung zwischen der Position des Datenpakets des wenigstens einen UE und der PUCCH-Rückmeldungsbetriebsmittelposition wenigstens eines des Folgenden umfasst:
eine Zuordnungsbeziehung zwischen der Position des Datenpakets des wenigstens einen UE, einer CCE, die zum Senden der Steuersignalisierung verwendet wird, und der PUCCH-Rückmeldungsbetriebsmittelposition; und
eine Zuordnungsbeziehung zwischen der Position des Datenpakets des wenigstens einen UE und einer vorkonfigurierten PUCCH-Rückmeldungsbetriebsmittelposition.

4. Verfahren nach Anspruch 1, wobei das Empfangen, durch das UE, der verwürfelten Steuersignalisierung auf dem PDCCH Folgendes umfasst:
Empfangen, durch das UE, der verwürfelten Steuersignalisierung auf dem PDCCH in einem gemeinsamen Suchraum, wobei die Anzahl von CCEs, die durch die verwürfelte Steuersignalisierung besetzt sind, ein Wert außer 4 und 8 ist; oder die Anzahl der CCEs, die durch den gemeinsamen Suchraum besetzt sind, ein Wert außer 16 ist; oder die Gruppenplanungsidentität, die durch das UE empfangen wird, eine P-RNTI oder eine SI-RNTI ist, wenn das UE und andere UEs in einer Zelle, zu der das UE gehört, in der einen Gruppe sind; oder
Empfangen, durch das UE, der Steuersignalisierung, die der Gruppe entspricht, zu der das UE gehört, in einem konfigurierten Gruppenplanungsraum, wobei der konfigurierte Gruppenplanungsraum ein Gruppenplanungsraum ist, der durch eine RRC-Nachricht, die durch das UE empfangen wird, konfiguriert ist, oder ein Gruppenplanungsraum ist, der durch das UE verwendet wird und statisch konfiguriert ist.

5. Verfahren nach Anspruch 1, wobei die Anzahl geplanter UEs, die dem Datenpaket entsprechen, das von der MAC-PDU umfasst ist, kleiner als die oder gleich der Anzahl von CCEs ist, die durch die Steuersignalisierung besetzt sind; oder die Anzahl geplanter UEs, die dem Datenpaket entspricht, das von der MAC-PDU umfasst ist, größer als die Anzahl von CCEs ist, die durch die Steuersignalisierung besetzt sind, und das UE, das die ACK-Rückmeldungsinformationen sendet, ein UE ist, das Rückmeldung ausführen muss.

6. Verfahren nach Anspruch 5, wobei,
eine Folgenummer des Datenpakets, das dem UE entspricht, das Rückmeldung ausführen muss, in der MAC-PDU kleiner als die oder gleich der Anzahl von CCEs ist, die durch die Steuersignalisierung besetzt sind; oder
das UE, das Rückmeldung ausführen muss, ein UE ist, das Rückmeldung ausführen muss und in der MAC-PDU spezifiziert ist.

7. Verfahren nach Anspruch 1, wobei das Verfahren nach dem Empfangen der MAC-PDU ferner Folgendes umfasst:
erfolgreiches Decodieren, durch das UE, der MAC-PDU, wobei die erfolgreich decodierte MAC-PDU das Datenpaket des UE umfasst.

8. Verfahren nach Anspruch 1, wobei das Verfahren nach dem Empfangen der MAC-PDU ferner Folgendes umfasst:
Verwerfen, durch das UE, der MAC-PDU, falls das UE die MAC-PDU nicht erfolgreich decodiert oder die erfolgreich decodierte MAC-PDU kein Datenpaket des UE umfasst.

9. Gruppenbasiertes Planungsverfahren, das Folgendes umfasst:
Einkapseln (21), durch eine Netzseite, von Datenpaketen von UEs, die zu einer Gruppe gehören, in eine MAC-PDU;
Senden (22), durch die Netzseite, zu einem UE, der MAC-PDU und Steuersignalisierung, die mit einer Gruppenplanungsidentität der Gruppe, zu der das UE gehört, verwürfelt ist, so dass das UE die Steuersignalisierung gemäß der Gruppenplanungsidentität decodiert, die MAC-PDU gemäß der Steuersignalisierung empfängt und eine PUCCH-Rückmeldungsbetriebsmittelposition erhält, die einer Position eines Datenpakets des UE gemäß einer Zuordnungsbeziehung zwischen einer Position des Datenpakets des wenigstens eines UE in der MAC-PDU und der PUCCH-Rückmeldungsbetriebsmittelposition entspricht, wobei die Gruppenplanungsidentität zum Angeben der Gruppe, die durch die Steuersignalisierung auf einem physikalischen Abwärtsstreckensteuerkanal, PDCCH, geplant ist, verwendet wird, und
Empfangen (23), durch die Netzseite, von ACK-Rückmeldungsinformationen, die durch das UE an der entsprechenden PUCCH-Rückmeldungsbetriebsmittelposition gesendet werden.

10. Verfahren nach Anspruch 9, wobei das Verfahren ferner Folgendes umfasst:
Gruppieren, durch die Netzseite, von UEs in einem verbundenen Zustand, um wenigstens eine Gruppe zu erhalten; oder
Gruppieren, durch die Netzseite, der UEs, die gleichzeitig für eine Suchnachricht empfangsbereit sind, in eine Gruppe.

11. Verfahren nach Anspruch 10, wobei das Gruppieren, durch die Netzseite, der UEs in dem verbundenen Zustand, um die wenigstens eine Gruppe zu erhalten, Folgendes umfasst:
Gruppieren der UEs in dem verbundenen Zustand gemäß einem Abwärtsstreckenqualitätszustand und/oder einem Dienst-Burst-Zustand und/oder einem Dienstmerkmalszustand.

12. Verfahren nach Anspruch 9, wobei das Verfahren ferner Folgendes umfasst:
Bestimmen, durch die Netzseite, eines Datenpakets, das nicht korrekt empfangen wurde, und erneutes Senden des Datenpakets, das durch das UE nicht korrekt empfangen wurde, falls die Netzseite keine ACK-Rückmeldungsinformationen empfängt, die durch das UE gesendet werden;
wobei das erneute Senden des Datenpakets, das durch das UE nicht korrekt empfangen wurde, Folgendes umfasst:
Aufzeichnen, durch die Netzseite, der Anzahl von Planungsvorgängen für jedes Datenpaket jedes UE, wobei das Datenpaket des UE durch eine MAC-Schicht verworfen wird, wenn die Anzahl erneuter Sendevorgänge die maximal zulässige Anzahl von Spendevorgängen erreicht, und die Anzahl der Planungsvorgänge mit einer Summe der Anzahl von Planungsvorgängen mittels Gruppenplanung und der Anzahl von Planungsvorgängen mittels spezifischer Planung aktualisiert wird; und erneutes Senden, durch die Netzseite, des Datenpakets, das gemäß den Rückmeldungsinformationen durch das UE nicht korrekt empfangen wurde, wobei das erneut gesendete Datenpaket mittels der Gruppenplanung oder mittels der spezifischen Planung erneut gesendet wird, und das Datenpaket des UE während eines erneuten Sendens mittels der Gruppenplanung gemäß der ursprünglichen Gruppe kombiniert wird oder die Datenpakete des UE erneut kombiniert werden.

13. Verfahren nach Anspruch 9, das ferner Folgendes umfasst:
Konfigurierten, durch die Netzseite, einer PUCCH-Mehrfachantennensende-Diversity für das UE, wobei der PUCCH eine Mehrfachantennensende-Diversity ist.

14. Anwendergerät, UE, das Folgendes umfasst:
ein Erhaltemodul (381), das konfiguriert ist, eine Gruppenplanungsidentität zu erhalten, wobei die Gruppenplanungsidentität zum Angeben einer Gruppe verwendet wird, die durch Steuersignalisierung auf einem physikalischen Abwärtsstreckensteuerkanal, PDCCH, geplant ist;
ein erstes Empfangsmodul (382), das konfiguriert ist, verwürfelte Steuersignalisierung auf dem PDCCH zu empfangen und die verwürfelte Steuersignalisierung gemäß der Gruppenplanungsidentität, die durch das Erhaltemodul (381) erhalten wird, zu decodieren;
ein zweites Empfangsmodul (383), das konfiguriert ist, eine Medienzugangssteuerungs-Protokolldateneinheit, MAC-PDU, gemäß der decodierten Steuersignalisierung zu empfangen, die durch das erste Empfangsmodul (382) empfangen wird, wobei die MAC-PDU ein Datenpaket wenigstens eines UE in einer Gruppe umfasst; und
ein Rückmeldungsmodul (384), das konfiguriert ist, eine Rückmeldungsbetriebsmittelposition eines physikalischen Aufwartsstreckensteuerkanals, PUCCH-Rückmeldungsbetriebsmittelposition, die einer Position eines Datenpakets des UE entspricht, gemäß einer Zuordnungsbeziehung zwischen einer Position des Datenpakets des wenigstens einen UE in der MAC-PDU, die durch das zweite Empfangsmodul (383) empfangen wird, und der PUCCH-Rückmeldungsbetriebsmirtelposition, zu erhalten und ACK-Rückmeldungsinformationen an der entsprechenden PUCCH-Rückmeldungsbetriebsmittelposition zu senden.

15. UE nach Anspruch 14, wobei das Erhaltemodul (381) spezifisch konfiguriert ist:
eine Funkbetriebsmittelsteuerungsnachricht, RRC-Nachricht, zu empfangen, wobei die RRC-Nachricht die Gruppenplanungsidentität, die für das UE durch eine Netzseite zugewiesen ist, führt; oder
eine Suchnachricht zu empfangen, wobei die Suchnachricht eine Gruppenidentität führt, die der Suchnachricht entspricht, und die Gruppenidentität, die der Suchnachricht entspricht, als die Gruppenplanungsidentität zu verwenden; oder
die Gruppenplanungsidentität gemäß vorkonfigurierten Informationen zu erhalten.

16. UE nach Anspruch 14, wobei das erste Empfangsmodul (382) spezifisch konfiguriert ist:
die verwürfelte Steuersignalisierung auf dem PDCCH in einem gemeinsamen Suchraum zu empfangen, wobei die Anzahl von CCEs, die durch die verwürfelte Steuersignalisierung besetzt sind, ein Wert außer 4 und 8 ist; oder die Anzahl der CCEs, die durch den gemeinsamen Suchraum besetzt sind, ein Wert außer 16 ist;
oder die Gruppenplanungsidentität, die durch das UE empfangen wird, eine P-RNTI oder eine SI-RNTI ist, wenn das UE und andere UEs in einer Zelle, zu der das UE gehört, in der einen Gruppe sind; oder
die verwürfelte Steuersignalisierung, die der Gruppe entspricht, zu der das UE gehört, in einem konfigurierten Gruppenplanungsraum zu empfangen, wobei der konfigurierte Gruppenplanungsraum ein Gruppenplanungsraum ist, der durch eine RRC-Nachricht konfiguriert ist, die durch das UE empfangen wird, oder ein Gruppenplanungsraum ist, der durch das UE verwendet wird und statisch konfiguriert ist.

17. UE nach Anspruch 14, wobei das UE ferner Folgendes umfasst:
ein Decodierungsmodul, das konfiguriert ist, erfolgreich die MAC-PDU, die durch das zweite Empfangsmodul (383) empfangen wird, erfolgreich zu decodieren, wobei die erfolgreich decodierte MAC-PDU das Datenpaket des UE umfasst.

18. UE nach Anspruch 14, wobei das UE ferner Folgendes umfasst:
ein Verwurfsmodul, das konfiguriert ist, die MAC-PDU, die durch das zweite Empfangsmodul (383) empfangen wird, zu verwerfen, falls das UE die MAC-PDU nicht erfolgreich decodiert oder die erfolgreich decodierte MAC-PDU nicht das Datenpaket des UE umfasst.

19. Netzvorrichtung, die Folgendes umfasst:
ein Einkapselungsmodul (391), das konfiguriert ist, Datenpakete von UEs, die zu einer Gruppe gehören, in eine MAC-PDU einzukapseln;
ein Sendemodul (392), das konfiguriert ist, die MAC-PDU, die durch das Einkapselungsmodul (391) erhalten wird, und Steuersignalisierung, die mit einer Gruppenplanungsidentität der Gruppe, zu der das UE gehört, verwürfelt ist, zu einem UE zu senden, so dass das UE die Steuersignalisierung gemäß der Gruppenplanungsidentität decodiert, die MAC-PDU gemäß der Steuersignalisierung empfängt und eine PUCCH-Rückmeldungsbetriebsmittelposition erhält, die einer Position des Datenpakets des UE gemäß einer Zuordnungsbeziehung zwischen der Position des Datenpakets wenigstens eines UE in der MAC-PDU und der PUCCH-Rückmeldungsbetriebsmittelposition entspricht, wobei die Gruppenplanungsidentität zum Angeben der Gruppe, die durch die Steuersignalisierung auf einem physikalischen Abwärtsstreckensteuerkanal, PDCCH, geplant ist, verwendet wird; und
ein Empfangsmodul (393), das konfiguriert ist, ACK-Rückmeldungsinformationen zu empfangen, die durch das UE gesendet werden, zu dem das Sendemodul (392) die MAC-PDU an der entsprechenden PUCCH-Rückmeldungsbetriebsmittelposition sendet.

20. Netzvorrichtung nach Anspruch 19, wobei die Netzvorrichtung ferner Folgendes umfasst:
ein Gruppierungsmodul, das konfiguriert ist, UEs in einem verbundenen Zustand zu gruppieren und wenigstens eine Gruppe zu erhalten; oder die UEs, die gleichzeitig für eine Suchnachricht empfangsbereit sind, in eine Gruppe zu gruppieren, so dass das Einkapselungsmodul (391) die Datenpakete der UEs, die zu der einen Gruppe gehören, in die eine MAC-PDU einkapselt.

21. Netzvorrichtung nach Anspruch 19, wobei die Netzvorrichtung ferner Folgendes umfasst:
ein Modul zum erneuten Senden, das konfiguriert ist, ein Datenpaket zu bestimmen, das nicht korrekt empfangen worden ist, und das Datenpaket, das durch das UE nicht korrekt empfangen worden ist, erneut zu senden, falls das Empfangsmodul (393) keine ACK-Rückmeldungsinformationen empfängt, die durch das UE gesendet werden.

22. Netzvorrichtung nach Anspruch 19, wobei das Modul zum erneuten Senden spezifisch konfiguriert ist, die Anzahl von Planungsvorgängen für jedes Datenpaket jedes UE aufzuzeichnen, wobei ein Datenpaket des UE durch eine MAC-Schicht verworfen wird, wenn die Anzahl von den erneuten Sendevorgänge die maximal zulässige Anzahl von Spendevorgängen erreicht, und die Anzahl der Planungsvorgänge mit einer Summe der Anzahl von Planungsvorgängen mittels Gruppenplanung und der Anzahl von Planungsvorgängen mittels spezifischer Planung aktualisiert wird; und das Datenpaket, das durch das UE nicht korrekt empfangen wurde, erneut gesendet wird, wobei das erneut gesendete Datenpaket mittels der Gruppenplanung oder mittels der spezifischen Planung erneut gesendet wird, und während eines erneuten Sendens mittels der Gruppenplanung das Datenpaket des UE gemäß der ursprünglichen Gruppe kombiniert wird, oder das Datenpaket des UE erneut kombiniert wird.

## Revendications

1. Procédé de planification basé sur un groupe, comprenant les étapes suivantes :
obtenir (11), par un UE, une identité de planification de groupe, où l'identité de planification de groupe est utilisée pour indiquer un groupe planifié par une signalisation de contrôle sur un canal de contrôle de liaison descendante physique, PDCCH ;
recevoir (12), par l'UE, une signalisation de contrôle brouillée sur le canal PDCCH, et décoder la signalisation de contrôle brouillée selon l'identité de planification de groupe ;
recevoir (13), par l'UE, une unité de données de protocole de contrôle d'accès au support, MAC PDU, conformément à la signalisation de contrôle décodée, où la MAC PDU comprend un paquet de données d'au moins un équipement utilisateur, UE, dans un groupe ; et
obtenir (14), par l'UE, une position de ressource de retour de canal de contrôle de liaison montante physique, PUCCH, correspondant à une position d'un paquet de données de l'UE selon une relation correspondante entre une position du paquet de données de l'au moins un UE dans l'unité MAC PDU et la position de ressource de retour de canal PUCCH, et envoyer des informations de retour ACK à la position de ressource de retour de canal PUCCH correspondante.

2. Procédé selon la revendication 1, dans lequel obtenir, par l'UE, l'identité de planification de groupe, comprend les étapes suivantes :
recevoir, par l'UE, un message de contrôle de ressource radio, RRC, ou le message RRC achemine l'identité de planification de groupe assignée pour l'UE par un côté réseau ; ou
recevoir, par l'UE, un message de radiomessagerie, où le message de radiomessagerie achemine une identité de groupe correspondant au message de radiomessagerie, et prendre l'identité de groupe correspondant au message de radiomessagerie comme identité de planification de groupe ; ou
obtenir, par l'UE, l'identité de planification de groupe selon des informations préconfigurées.

3. Procédé selon la revendication 1, dans lequel la relation correspondante entre la position du paquet de données de l'au moins un UE et la position de ressource de retour de canal PUCCH comprend au moins une relation parmi :
une relation correspondante entre la position du paquet de données de l'au moins un UE, un CCE utilisé pour l'envoi de la signalisation de contrôle et la position de ressource de retour de canal PUCCH ; et
une relation correspondante entre la position du paquet de données de l'au moins un UE et une position de ressource de retour de canal PDCCH.

4. Procédé selon la revendication 1, dans lequel recevoir, par l'UE, la signalisation de contrôle brouillée sur le canal PDCCH, comprend les étapes suivantes :
recevoir, par l'UE, la signalisation de contrôle brouillée sur le canal PDCCH dans un espace de recherche commun, où le nombre de CCE occupés par la signalisation de contrôle brouillée est une valeur à l'exception de 4 et de 8 ; ou le nombre de CCE occupés par l'espace de recherche commun est une valeur à l'exception de 16 ; ou
l'identité de planification de groupe reçue par l'UE est une P-RNTI ou une SI-RNTI lorsque l'UE et d'autres UE dans une cellule à laquelle l'UE appartient sont dans le groupe ; ou
recevoir, par l'UE, la signalisation de contrôle brouillée correspondant au groupe auquel l'UE appartient dans un espace de planification de groupe configuré, où l'espace de planification de groupe configuré est un espace de planification de groupe configuré par un message RRC reçu par l'UE, ou un espace de planification de groupe qui est utilisé par l'UE et est configuré de manière statique.

5. Procédé selon la revendication 1, dans lequel le nombre d'UE planifiés correspondant au paquet de données compris dans l'unité MAC PDU est inférieur ou égal au nombre de CCE occupés par la signalisation de contrôle ; ou le nombre d'UE planifiés correspondant au paquet de données compris dans l'unité MAC PDU est supérieur au nombre de CCE occupés par la signalisation de contrôle, et l'UE qui envoie les informations de retour ACK est un UE qui a besoin d'effectuer un retour.

6. Procédé selon la revendication 5, dans lequel
un numéro de séquence du paquet de données, correspondant à l'UE qui doit effectuer un retour, dans l'unité MAC PDU, est inférieur ou égal au nombre de CCE occupés par la signalisation de contrôle ; ou
l'UE qui doit effectuer un retour est un UE qui doit effectuer un retour et qui est spécifié dans l'unité MAC PDU.

7. Procédé selon la revendication 1, dans lequel, après la réception de l'unité MAC PDU, le procédé comprend en outre les étapes suivantes :
décoder avec succès, par l'UE, l'unité MAC PDU, où l'unité MAC PDU décodée avec succès comprend le paquet de données de l'UE.

8. Procédé selon la revendication 1, dans lequel après la réception de l'unité MAC PDU, le procédé comprend en outre les étapes suivantes :
rejeter, par l'UE, l'unité MAC PDU, si l'UE ne décode pas correctement l'unité MAC PDU ou si l'unité MAC PDU décodée avec succès ne comprend pas un paquet de données de l'UE.

9. Procédé de planification basé sur un groupe, comprenant les étapes suivantes :
encapsuler (21), par un côté réseau, des paquets de données d'UE qui appartiennent à un groupe dans une unité MAC PDU ;
envoyer (22), par le côté réseau, à un UE, l'unité MAC PDU et une signalisation de contrôle brouillée avec une identité de planification de groupe du groupe auquel l'UE appartient, de sorte que l'UE décode la signalisation de contrôle selon l'identité de planification de groupe, reçoive l'unité MAC PDU selon la signalisation de contrôle, et obtienne une position de ressource de retour de canal PUCCH correspondant à une position d'un paquet de données de l'UE selon une relation correspondante entre une position du paquet de données d'au moins un UE dans l'unité MAC PDU et la position de ressource de retour de canal PUCCH, où l'identité de planification de groupe est utilisée pour indiquer le groupe planifié par la signalisation de contrôle sur un canal de contrôle de liaison descendante physique, PDCCH ; et
recevoir (23), par le côté réseau, des informations de retour ACK envoyées par l'UE à la position de ressource de retour de canal PUCCH correspondante.

10. Procédé selon la revendication 9, dans lequel le procédé comprend en outre les étapes suivantes :
grouper, par le côté réseau, des UE dans un état connecté pour obtenir au moins un groupe ; ou
grouper, par le côté réseau, les UE écoutant simultanément un message de radiomessagerie dans le groupe.

11. Procédé selon la revendication 10, dans lequel grouper, par le côté réseau, les UE dans l'état connecté pour obtenir l'au moins un groupe comprend les étapes suivantes :
grouper les UE dans l'état connecté selon au moins une condition parmi une condition de qualité de liaison descendante, une condition de salve de service, et une condition de caractéristique de service.

12. Procédé selon la revendication 9, dans lequel le procédé comprend en outre les étapes suivantes :
déterminer, par le côté réseau, un paquet de données qui n'a pas été correctement reçu et retransmettre le paquet de données qui n'a pas été correctement reçu par l'UE, si le côté réseau ne reçoit pas les informations de retour ACK qui sont envoyées par l'UE ;
où retransmettre le paquet de données qui n'a pas été correctement reçu par l'UE comprend les étapes suivantes :
enregistrer, par le côté réseau, le nombre d'occurrences de planification pour chaque paquet de données de chaque UE, où un paquet de données de l'UE est rejeté par une couche MAC lorsque le nombre d'occurrences de retransmission atteint le nombre d'occurrences de transmission maximum admissible, et le nombre d'occurrences de planification est mis à jour avec une somme du nombre d'occurrences de planification au moyen d'une planification de groupe et du nombre d'occurrences de planification au moyen d'une planification spécifique ; et
retransmettre, par le côté réseau, le paquet de données qui n'a pas été correctement reçu par l'UE selon les informations de retour, où le paquet de données retransmis est retransmis au moyen de la planification de groupe ou au moyen de la planification spécifique, et lors d'une retransmission au moyen de la planification de groupe, le paquet de données de l'UE est combiné selon le groupe d'origine, ou le paquet de données de l'UE est recombiné.

13. Procédé selon la revendication 9, comprenant en outre les étapes suivantes :
configurer, par le côté réseau, une diversité de transmission à antennes multiples PUCCH pour l'UE, où le canal PUCCH est une diversité de transmission à antennes multiples,

14. Equipement d'utilisateur, UE, comprenant :
un module d'obtention (381), configuré pour obtenir une identité de planification de groupe, où l'identité de planification de groupe est utilisée pour indiquer un groupe planifié par une signalisation de contrôle sur un canal de contrôle de liaison descendante physique, PDCCH ;
un premier module de réception (382), configuré pour recevoir une signalisation de contrôle brouillée sur le canal PDCCH, et décoder la signalisation de contrôle brouillée selon l'identité de planification de groupe obtenue par le module d'obtention (381) ;
un second module de réception (383), configuré pour recevoir une unité de données de protocole de contrôle d'accès au support, MAC PDU, conformément à la signalisation de contrôle décodée reçue par le premier module de réception (382), où l'unité MAC PDU comprend un paquet de données d'au moins un UE dans un groupe ; et
un module de retour (384), configuré pour obtenir une position de ressource de retour de canal de contrôle de liaison montante physique, PUCCH, correspondant à une position d'un paquet de données de l'UE selon une relation correspondante entre une position du paquet de données de l'au moins un UE dans l'unité MAC PDU reçue par le second module de réception (383) et la position de ressource de retour de canal PUCCH, et pour envoyer des informations de retour ACK à la position de ressource de retour de canal PUCCH correspondante.

15. UE selon la revendication 14, dans lequel le module d'obtention (381) est spécifiquement configuré pour ;
recevoir un message de contrôle de ressource radio, RRC, où le message RRC achemine l'identité de planification de groupe assignée pour l'UE par un côté réseau ; ou
recevoir un message de radiomessagerie, où le message de radiomessagerie achemine une identité de groupe correspondant au message de radiomessagerie, et prendre l'identité de groupe correspondant au message de radiomessagerie comme identité de planification de groupe ; ou
obtenir l'identité de planification de groupe selon des informations préconfigurées

16. UE selon la revendication 14, dans lequel le premier module de réception (382) est spécifiquement configuré pour :
recevoir la signalisation de contrôle brouillée sur le canal PDCCH dans un espace de recherche commun, où le nombre de CCE occupés par la signalisation de contrôle brouillée est une valeur à l'exception de 4 et de 8 ; ou le nombre de CCE occupés par l'espace de recherche commun est une valeur à l'exception de 16 ; ou l'identité de planification de groupe reçue par l'UE est une P-RNTI ou une SI-RNTI lorsque l'UE et d'autres UE dans une cellule à laquelle l'UE appartient sont dans le groupe ; ou recevoir la signalisation de contrôle brouillée correspondant au groupe auquel l'UE appartient dans un espace de planification de groupe configuré, où l'espace de planification de groupe configuré est un espace de planification de groupe configuré par un message RRC reçu par l'UE, ou un espace de planification de groupe qui est utilisé par l'UE et est configuré de manière statique.

17. UE selon la revendication 14, dans lequel l'UE comprend en outre :
un module de décodage, configuré pour décoder avec succès l'unité MAC PDU reçue par le second module de réception (383), où l'unité MAC PDU décodée avec succès comprend le paquet de données de l'UE.

18. UE selon la revendication 14, dans lequel l'UE comprend en outre :
un module de rejet, configuré pour rejeter l'unité MAC PDU reçue par le second module de réception (383) si l'UE ne décode pas avec succès l'unité MAC PDU ou si l'unité MAC PDU décodée avec succès ne comprend pas le paquet de données de l'UE.

19. Dispositif réseau comprenant:
un module d'encapsulation (391), configuré pour encapsuler des paquets de données d'UE qui appartiennent à un groupe dans une unité MAC PDU ;
un module d'envoi (392), configuré pour envoyer, à un UE, l'unité MAC PDU obtenue par le module d'encapsulation (391) et pour contrôler une signalisation de contrôle brouillée avec une identité de planification de groupe du groupe auquel l'UE appartient, de sorte que l'UE décode la signalisation de contrôle selon l'identité de planification de groupe, reçoive l'unité MAC PDU selon la signalisation de contrôle, et obtienne une position de ressource de retour de canal PUCCH correspondant à une position d'un paquet de données de l'UE selon une relation correspondante entre la position du paquet de données d'au moins un UE dans l'unité MAC PDU et la position de ressource de retour de canal PUCCH, où l'identité de planification de groupe est utilisée pour indiquer le groupe planifié par la signalisation de contrôle sur un canal de contrôle de liaison descendante physique, PDCCH ; et
un module de réception (393), configuré pour recevoir des informations de retour ACK envoyées par l'UE auquel le module d'envoi (392) envoie l'unité MAC PDU à la position de ressource de retour de canal PUCCH correspondante.

20. Dispositif réseau selon la revendication 19, où le dispositif réseau comprend en outre :
un module de groupement, configuré pour grouper des UE dans un état connecté, et pour obtenir au moins un groupe ; ou pour grouper les UE écoutant simultanément un message de radiomessagerie dans le groupe, de manière à ce que le module d'encapsulation (391) encapsule les paquets de données des UE qui appartiennent au groupe dans l'unité MAC PDU,

21. Dispositif réseau selon la revendication 19, où le dispositif réseau comprend en outre :
un module de retransmission, configuré pour déterminer un paquet de données qui n'a pas été correctement reçu et retransmettre le paquet de données qui n'a pas été correctement reçu par l'UE, si le module de réception (393) ne reçoit pas les informations de retour ACK qui sont envoyées par l'UE.

22. Dispositif réseau selon la revendication 19, où le module de retransmission est spécifiquement configuré pour enregistrer le nombre d'occurrences de planification pour chaque paquet de données de chaque UE, où un paquet de données de l'UE est rejeté par une couche MAC lorsque le nombre d'occurrences de retransmission atteint le nombre d'occurrences de transmission maximum admissible, et le nombre d'occurrences de planification est mis à jour avec une somme du nombre d'occurrences de planification au moyen d'une planification de groupe et du nombre d'occurrences de planification au moyen d'une planification spécifique ; et le paquet de données qui n'a pas été correctement reçu par l'UE est retransmis, où le paquet de données retransmis est retransmis au moyen de la planification de groupe ou au moyen de la planification spécifique, et lors d'une retransmission au moyen de la planification de groupe, le paquet de données de l'UE est combiné selon le groupe d'origine, ou le paquet de données de l'UE est recombiné.
